(19) Europäisches Patentamt
European Patent Office
Office européen des brevets

(11) Veröffentlichungsnummer: **0 070 807**
**B1**

# (12) EUROPÄISCHE PATENTSCHRIFT

(45) Veröffentlichungstag der Patentschrift: **29.05.85**

(51) Int. Cl.[4]: **C 09 B 62/503,** C 09 B 62/04, D 06 P 3/66

(21) Anmeldenummer: **82810306.9**

(22) Anmeldetag: **15.07.82**

(54) **Reaktivfarbstoffe, deren Herstellung und Verwendung.**

(30) Priorität: **21.07.81 CH 4765/81**

(43) Veröffentlichungstag der Anmeldung: **26.01.83 Patentblatt 83/4**

(45) Bekanntmachung des Hinweises auf die Patenterteilung: **29.05.85 Patentblatt 85/22**

(84) Benannte Vertragsstaaten: **CH DE FR GB LI**

(56) Entgegenhaltungen:
**DE - B - 1 150 164**
**FR - A - 2 346 418**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Seiler, Herbert, Dr., Leimgrubenweg 60, CH-4125 Riehen (CH)**

**EP 0 070 807 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Reaktivfarbstoffe werden in großem Umfange für das Färben und Bedrucken von textilen Fasermaterialien eingesetzt. Obwohl heute eine große Anzahl von brauchbaren Reaktivfarbstoffen mit unterschiedlichen Eigenschaften und für verschiedene Anwendungsbereiche zur Verfügung steht, kann der erreichte technische Stand vielfach nicht voll befriedigen.

So ist häufig zu beobachten, daß der Fixiergrad nicht hoch genug ist, und zudem die Differenz zwischen Aufziehgrad und Fixiergrad zu groß ist (hoher Seifverlust), so daß ein erheblicher Teil des Reaktivfarbstoffes für den Färbevorgang verloren geht. Die Bereitstellung von verbesserten Reaktivfarbstoffen ist somit erwünscht. Der vorliegenden Erfindung lag daher die Aufgabe zugrunde, neue Reaktivfarbstoffe zu finden, die eine hohe Reaktivität besitzen, die aber den oben genannten Mangel nicht aufweisen, und die zudem besonders für das Ausziehfärbeverfahren geeignet sind. Es hat sich gezeigt, daß die weiter unten definierten neuen Reaktivfarbstoffe die gestellte Aufgabe weitgehend erfüllen.

Gegenstand der Erfindung sind Reaktivfarbstoffe der Formel

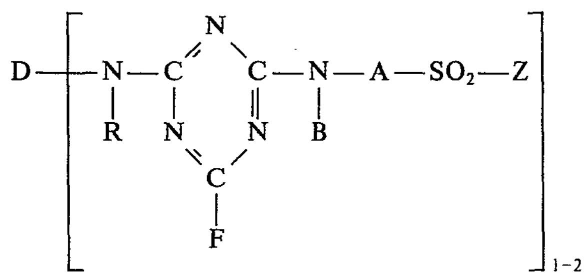

(1)

worin D der Rest eines organischen Farbstoffes der Anthrachinon-, Phthalocyanin-, Formazan-, Azomethin-, Dioxazin-, Phemazin-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, A $C_{2-6}$-Alkylen, Z $\beta$-Halogenäthyl oder Vinyl und B Wasserstoff oder der Rest eines gegebenenfalls substituierten Kohlenwasserstoffs ist.

Bevorzugte Untergruppen der Reaktivfarbstoffe der Formel (1) sind

a) Reaktivfarbstoffe der Formel (1), worin D, R, A und Z die unter Formel (1) angegebenen Bedeutungen haben, und B Wasserstoff oder $C_{1-4}$-Alkyl ist.

b) Reaktivfarbstoffe der Formel (1), worin D, R, A und Z die unter Fornmel (1) angegebenen Bedeutungen haben, und B ein Rest der Formel

$$—A—SO_2—Z \qquad (2)$$

ist, worin A und Z die unter Formel (1) angegebenen Bedeutungen haben.

c) Reaktivfarbstoffe der Formel (1), worin D, R, Z und B die unter Formel (1) angegebenen Bedeutungen haben, und A Äthylen ist.

d) Reaktivfarbstoffe gemäß a), der Formel

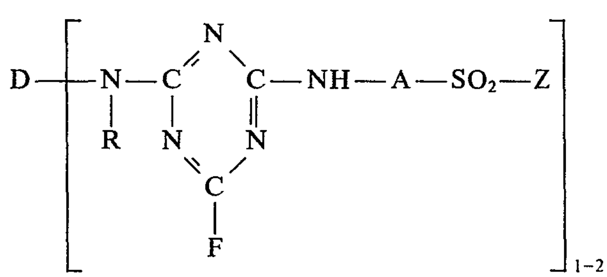

(3)

worin D und Z die unter a) angegebenen Bedeutungen haben, R Wasserstoff, Methyl oder Äthyl und A $C_{2-4}$-Alkylen ist.

e) Reaktivfarbstoff gemäß d), worin A Äthylen ist.

f) Reaktivfarbstoffe gemäß b), der Formel

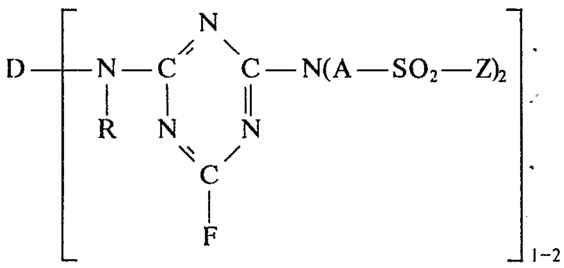

(4)

worin D und Z die unter b) angegebenen Bedeutungen haben, R Wasserstoff, Methyl oder Äthyl, und A $C_{2-4}$-Alkylen ist.

g) Reaktivfarbstoffe gemäß f), worin A Äthylen ist.

h) Reaktivfarbstoffe gemäß a) bis g), worin D der Rest eines Formazanfarbstoffes ist.

i) Reaktivfarbstoffe gemäß a) bis g), worin D der Rest eines Anthrachinon- oder Phthalocyaninfarbstoffes ist.

j) Reaktivfarbstoffe gemäß a) bis g), worin D der Rest eines Dioxazinfarbstoffes ist.

Der Rest D in Formel (1) kann in der üblichen Art substituiert sein, insbesondere enthält der Rest D eine oder mehrere Sulfonsäuregruppen.

Als Beispiele für weitere Substituenten am Rest D seien genannt Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, Carboxy, Sulfomethyl und Sulfo.

Als Alkylrest kommt für R in Formel (1) ein geradkettiger oder verzweigter Alkylrest in Betracht, der auch substituiert sein kann, z. B. durch Halogen, Hydroxy, Cyan oder Sulfo. Als Beispiele für R seien genannt: Methyl, Äthyl, Propyl, Isopropyl, Butyl, Isobutyl, sek.-Butyl, tert.-Butyl, $\beta$-Chloräthyl, $\beta$-Hydroxyäthyl, $\beta$-Hydroxybutyl, $\beta$-Cyanäthyl und Sulfomethyl.

Als $C_{2-6}$-Alkylenrest kommt für A in Formel (1) ein geradkettiger oder verzweigter Alkylenrest in Betracht, z. B. Äthylen, n-Propylen, Isopropylen, n-Butylen, n-Pentylen und n-Hexylen. Bevorzugt ist der Äthylenrest.

Der Rest eines gegebenenfalls substituierten Kohlenwasserstoffs B ist z. B. ein Alkylrest, der geradkettig oder verzweigt ist, der vorzugsweise 1 bis 6 Kohlenstoffatome aufweist, und der weitersubstituiert sein kann, z. B. durch Halogen, Hydroxy, Cyan, Alkoxy, Carboxy oder Sulfo, oder ein unsubstituierter Alkylrest mit 7 bis 20 Kohlenstoffatomen, ein Cyclohexylrest, oder ein Phenylrest, der z. B. durch Methyl, Äthyl, Methoxy, Äthoxy, Chlor, Brom, Carboxy, Sulfo oder Sulfomethyl substituiert sein kann.

Als Beispiele für B seien die folgenden Substituenten genannt:
Methyl, Äthyl, Propyl, Isopropyl, Butyl, Isobutyl, sek.-Butyl, tert.-Butyl, Pentyl, Hexyl, Nonyl, Dodecyl, Hexadecyl, Pentadecyl, Carboxymethyl, $\beta$-Carboxyäthyl, $\beta$-Carboxypropyl, Methoxycarbonylmethyl, Äthoxycarbonylmethyl, $\beta$-Methoxyäthyl, $\beta$-Äthoxyäthyl, $\beta$-Methoxypropyl, $\beta$-Chloräthyl, $\gamma$-Chlorpropyl, $\gamma$-Brompropyl, Sulfomethyl, $\beta$-Sulfoäthyl, Aminosulfonylmethyl, $\beta$-Sulfatoäthyl, Cyclohexyl, Phenyl, o-, m- oder p-Chlorphenyl, o-, m- oder p-Methylphenyl, p-Äthylphenyl, p-Methoxyphenyl, o-, m- oder p-Sulfophenyl, p-Carboxyphenyl und p-Sulfomethylphenyl. Bevorzugt sind unsubstituierte Alkylreste mit 1 bis 4 Kohlenstoffatomen.

Insbesondere ist B Wasserstoff oder ein Rest der Formel

$$—A—SO_2—Z \qquad (2)$$

worin A und Z die unter Formel (1) angegebenen Bedeutungen haben.

Falls B ein Rest der Formel (2) ist, können die beiden Reste der Formel (2), welche an das Stickstoffatom des externen Restes in Formel (1) gebunden sind gleich oder verschieden sein. Vorzugsweise sind beide Reste der Formel (2) gleich.

Die Farbstoffe der Formel (1) sind faserreativ, da sie am Triazinrest mindestens eine Abgangsgruppe enthalten.

Unter faserreativen Verbindungen sind solche zu verstehen, die mit den Hydroxygruppen der Cellulose oder mit den Aminogruppen von natürlichen oder synthetischen Polyamiden unter Bildung kovalenter chemischer Bindungen zu reagieren vermögen.

Die Herstellung der Reaktivfarbstoffe der Formel (1) ist dadurch gekennzeichnet, daß man organische Farbstoffe der Formel

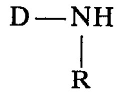

(5)

oder Farbstoffvorprodukte mit mindestens einem Äquivalent 2,4,6-Trifluor-1,3,5-triazin der Formel

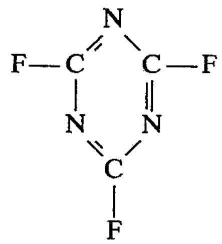

(6)

kondensiert, und das Kondensationsprodukt mit mindestens einem Äquivalent eines Amins der Formel

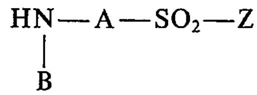

(7)

zu einem Reaktivfarbstoff der Formel (1) kondensiert, wobei D, R, A, Z und B in den Formeln (5) und (7) die unter Formel (1) angegebenen Bedeutungen haben, und daß man im Falle der Verwendung von Farbstoffvorprodukten, diese in die gewünschten Endfarbstoffe umwandelt.

Vorzugsweise verwendet man als Ausgangsstoffe Amine der Formel (7), worin A Äthylen ist.

Nach der Verfahrensvariante, bei welcher man von Farbstoffvorprodukten ausgeht, können die Farbstoffe der Formel (1), worin D der Rest eines aus zwei oder mehr als zwei Komponenten zusammengesetzten organischen Farbstoffes ist, in der Weise hergestellt werden, daß man eine Komponente des Farbstoffes der Formel (5), die eine

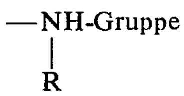

enthält, und eine Verbindung der Formel (6) kondensiert, und in einer beliebigen Stufe des Verfahrens mit einem Amin der Formel (7) und mit der anderen (bzw. den übrigen) Komponente(n) des Farbstoffes der Formel (5) zu einem Reaktivfarbstoff der Formel (1) umsetzt.

Beispiele für derartige, aus zwei oder mehr als zwei Komponenten zusammengesetzte organische Farbstoffe sind: Formazan- und Azomethinfarbstoffe.

Farbstoffe, die zwei Reaktivreste enthalten, sind in der Weise herstellbar, daß man Farbstoffe der Formel (5), die in D weitere

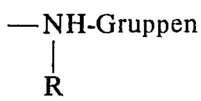

enthalten, mit einer entsprechenden Menge des Acylierungsmittels der Formel (6) kondensiert, so daß zwei entsprechende Reste in das Farbstoffmolekül eingeführt werden, und dann mit einer entsprechenden Menge eines Amins der Formel (7) kondensiert.

Die als Ausgangsstoffe verwendeten Farbstoffe der Formel (5) können im Rest D wie weiter vorn beschrieben substituiert sein.

Bei dem im vorangehenden beschriebenen Verfahren können die einzelnen Verfahrensschritte in unterschiedlicher Reihenfolge, gegebenenfalls teilweise auch gleichzeitig ausgeführt werden. Dabei sind verschiedene Verfahrensvarianten möglich. Im allgemeinen führt man die Umsetzung schrittweise nacheinander aus, wobei die Reihenfolge der einfachen Reaktion zwischen den einzelnen Reaktionskomponenten frei gewählt werden kann.

Geht man, wie weiter vorn beschrieben nicht von einem organischen Farbstoff der Formel (5) sondern von dessen Komponenten, aus, so wird die Zahl der möglichen Ausführungsvarianten (Reaktionsfolgen) noch größer. Diese lassen sich aber aufgrund der gegebenen Beschreibung ohne weiters angeben.

Die Kondensation der Verbindungen der Formel (6) mit den organischen Farbstoffen der Formel (5) bzw. den eine

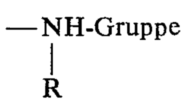

enthaltenden Komponenten erfolgen vorzugsweise in wäßriger Lösung oder Suspension, bei niedriger Temperatur, vorzugsweise zwischen 0 und 5 °C und bei schwach saurem, neutralem bis schwach alkalischem pH-Wert. Vorteilhaft wird der bei der Kondensation freiwerdende Fluorwasserstoff laufend durch Zugabe wäßriger Alkalihydroxyde, -carbonate oder -bicarbonate neutralisiert.

Für die weitere Umsetzung der so erhaltenen Difluortriazinfarbstoffe mit den Aminen der Formel (7) setzt man die Amine zweckmäßigerweise in Form eines Salzes, bevorzugt in Form des Hydrochlorides, ein. Die Umsetzung wird bei Temperaturen etwa zwischen 5 und 40°, bevorzugt zwischen 5 und 25°, unter Zusatz säurebindender Mittel, bevorzugt Natriumcarbonat, in einem pH-Bereich von 2 bis 6,5, bevorzugt 5 bis 6,5 durchgeführt.

Als Farbstoffe der Formel (5) kommen besonders Farbstoffe der folgenden Strukturtypen in Betracht:

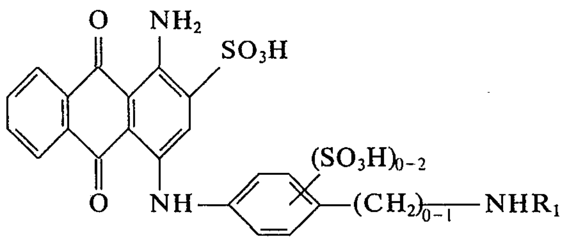

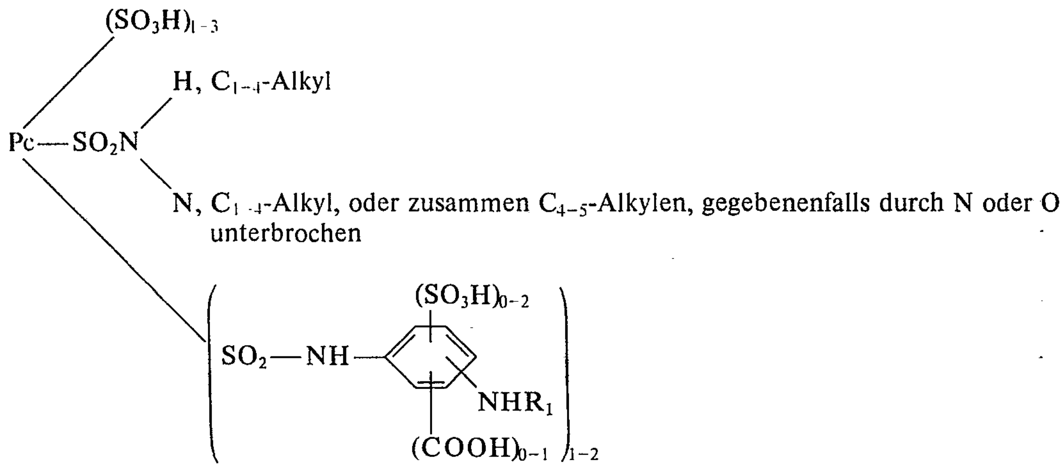


In dieser Formel steht Pc für den Cu- oder Ni-Phthalocyaninrest. Die Gesamtzahl der Substituenten am Pc-Gerüst ist dabei 4.

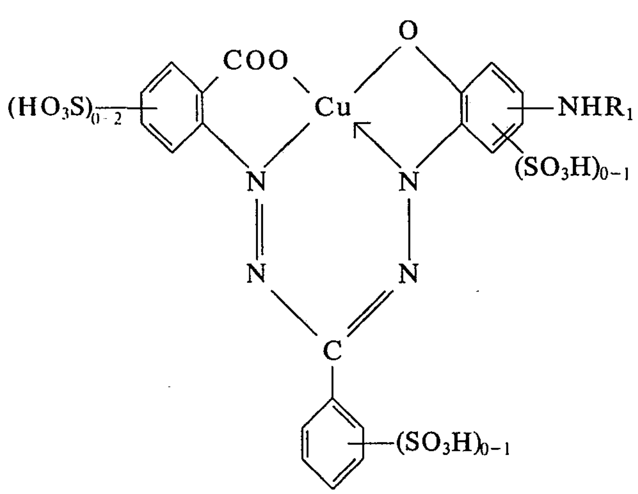

Die Farbstoffe der oben angegebenen Formeln können in den Alkyl- oder Arylresten weitersubstituiert sein, insbesondere durch die bei der Erläuterung von D in Formel (1) genannten Substituenten.

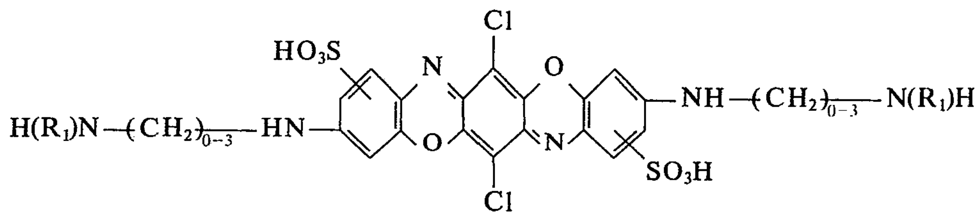

Beispiele für Amine der Formel (7) sind:

β-(β-Chloräthyl-sulfonyl)-äthyl-amin,
β-(β-Bromäthyl-sulfonyl)-äthyl-amin,
β-Vinylsulfonyl-äthyl-amin,
γ-(β-Chloräthyl-sulfonyl)-propyl-amin,
α-(β-Chloräthyl-sulfonyl)-isopropyl-amin,
δ-(β-Chloräthyl-sulfonyl)-butyl-amin,
β-(β-Chloräthyl-sulfonyl)-isobutyl-amin,
ε-(β-Chloräthyl-sulfonyl)-pentyl-amin,
β-(β-Chloräthyl-sulfonyl)-hexyl-amin,
N-Methyl-N-β-(β-chloräthyl-sulfonyl)-äthyl-amin,
N-Äthyl-N-β-(β-chloräthyl-sulfonyl)-äthyl-amin,
N-Propyl-N-β-(β-chloräthyl-sulfonyl)-äthyl-amin,
N-Butyl-N-β-(β-chloräthyl-sulfonyl)-äthyl-amin,
N-Pentyl-N-β-(β-chloräthyl-sulfonyl)-äthyl-amin,
N-Hexyl-N-β-(β-chloräthyl-sulfonyl)-äthyl-amin,
N-Nonyl-N-β-(β-chloräthyl-sulfonyl)-äthyl-amin,
N-Dodecyl-N-β-(β-chloräthyl-sulfonyl)-äthyl-amin,
N-Hexadecyl-N-β-(β-chloräthyl-sulfonyl)-äthyl-amin,
N-Octadecyl-N-β-(β-chloräthyl-sulfonyl)-äthyl-amin,
N-Carboxymethyl-N-β-(β-bromäthyl-sulfonyl)-äthyl-amin,
N-Sulfatomethyl-N-β-(β-chloräthyl-sulfonyl)-äthyl-amin,
N-β-Carboxyäthyl-N-γ-(β-chloräthyl-sulfonyl)-propyl-amin,
N-β-Sulfatoäthyl-N-γ-(β-chloräthyl-sulfonyl)-propyl-amin,
N-β-Sulfatoäthyl-N-δ-(β-chloräthyl-sulfonyl)-butyl-amin,
N-β-Äthoxyäthyl-N-δ-(β-chloräthyl-sulfonyl)-butyl-amin,
N-γ-Chlorpropyl-N-β-(β-chloräthyl-sulfonyl)-äthyl-amin,
N-Phenyl-N-β-(β-chloräthyl-sulfonyl)-äthyl-amin,
N-p-Chlorphenyl-N-β-(β-chloräthyl-sulfonyl)-äthyl-amin,
N-o-Methylphenyl-N-β-(β-chloräthyl-sulfonyl)-äthyl-amin,
N-p-Methoxyphenyl-N-β-(β-chloräthyl-sulfonyl)-äthyl-amin,
N-m-Sulfophenyl-N-β-(β-chloräthyl-sulfonyl)-äthyl-amin,
N-p-Sulfophenyl-N-β-(β-chloräthyl-sulfonyl)-äthyl-amin,
Bis-[β-(β-chloräthyl-sulfonyl)-äthyl]-amin,
Bis-[β-(β-bromäthyl-sulfonyl)-äthyl]-amin,
Bis-[γ-(β-chloräthyl-sulfonyl)-propyl]-amin,
Bis-[δ-(β-chloräthyl-sulfonyl)-butyl]-amin,
Bis-(β-vinyl-sulfonyl-äthyl)-amin.

Bevorzugt sind die Amine von niederem Molekulargewicht wie das β-(β-Chloräthyl-sulfonyl)-äthylamin und sein N-Methylderivat. Bevorzugt ist ferner das Bis-[β-(β-chloräthyl-sulfonyl)äthyl]-amin.

Die Reaktivfarbstoffe der Formel (1) eignen sich zum Färben und Bedrucken von verschiedensten Materialien, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wäßriger und gegebenenfalls auch salzhaltigen Farbstofflösungen imprägniert wird, und die Farbstoffe nach einer Alkalibehandlung oder in Gegenwart von Alkali, gegebenenfalls unter Wärmeeinwirkung fixiert werden.

Die Reaktivfarbstoffe der Formel (1) zeichnen sich durch hohe Reaktivität und gutes Fixiervermögen aus. Sie können daher nach dem Ausziehfärbeverfahren bei niedrigen Färbetemperaturen eingesetzt werden und erfordern beim Padsteam-Verfahren nur kurze Dämpfzeiten. Sie ergeben Färbungen mit guten Naß- und Lichtechtheiten und hoher Farbstärke und bemerkenswert hoher Faser-Farbstoff-Bindungsstabilität, sowohl in saurem als auch in alkalischem Bereich.

Die Reaktivfarbstoffe der Formel (1) eignen sich besonders zum Färben von Baumwolle nach dem Ausziehfärbeverfahren, wobei die Differenz zwischen Ausziehgrad und Fixiergrad bemerkenswert klein, d. h. der Seifverlust sehr gering ist.

Die Reaktivfarbstoffe der Formel (1) eignen sich auch zum Druck, insbesondere auf Baumwolle, ebenso aber auch zum Bedrucken von stickstoffhaltigen Fasern, z. B. von Wolle, Seide oder Wolle enthaltenden Mischgeweben.

Es empfiehlt sich, die Färbungen und Drucke einem gründlichen Spülen mit kaltem und heißem Wasser, gegebenenfalls unter Zusatz eines dispergierend wirkenden und die Diffusion der nicht fixierten Anteile fördernden Mittels zu unterwerfen.

In den nachfolgenden Beispielen bedeuten die Teile Gewichtsteile, und die Temperaturen sind in Celsiusgraden angegeben.

## Beispiel 1

29,7 g des Kupferkomplexes von N-(2-Carboxy-5-sulfophenyl)-N'-(2'-hydroxy-3'-amino-5'-sulfophenyl)-ms-phenyl-formazan werden in 500 ml Wasser neutral gelöst. Man kühlt durch Zugabe von Eis auf 0—5°C und tropft bei dieser Temperatur innert 30 Minuten 7,1 g 2,4,6-Trifluor-1,3,5-triazin zu, wobei man durch gleichzeitige Zugabe von 2 N-Natriumhydroxydlösung den pH-Wert der Reaktionsmischung bei 5 hält. Sobald chromatographisch kein Ausgangsfarbstoff mehr nachweisbar ist, werden 10,8 g β-(β-Chloräthyl-sulfonyl)-äthyl-amin-hydrochlorid zugegeben. Unter ständigem Abstumpfen des freiwerdenden Fluorwasserstoffs mit 2 N-Natriumcarbonatlösung und Erhöhung der Temperatur auf 20°C wird ein pH-Wert von 5 eingehalten. Nach beendigter Reaktion wird der Farbstoff der Formel

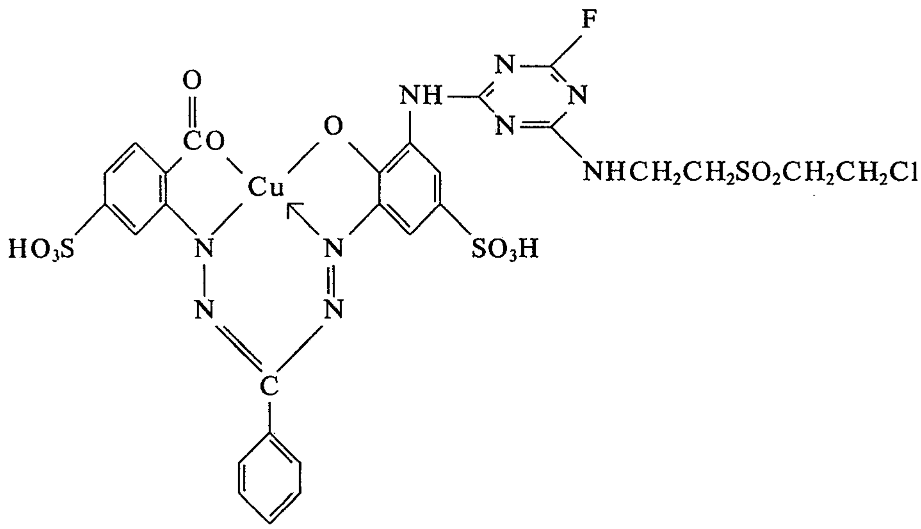

durch Einstreuen von Natriumchlorid ausgesalzen, filtriert, getrocknet und gemahlen. Er stellt ein blaues Pulver dar und färbt Baumwolle wie Zellwolle in kräftigen blauen Tönen.

Blaue Farbstoffe mit ähnlichen Eigenschaften werden erhalten, wenn man die in der nachfolgenden Tabelle 1 in der Spalte 2 aufgeführten Formazanfarbstoffe gemäß den Angaben des Beispiels 1 mit 2,4,6-Trifluor-1,3,5-triazin und gleich anschließend mit den in Spalte 3 genannten Aminen kondensiert.

Tabelle 1

| Nr. | Aminoformazan Cu-Komplex | Amin |
|---|---|---|
| 2 | N-(2-Carboxy-4-sulfophenyl)-N'-(2'-hydroxy-3'-amino-5'-sulfophenyl)-ms-phenyl-formazan | β-(β-Chloräthyl-sulfonyl)-äthyl-amin |
| 3 | N-(2-Carboxy-4-sulfophenyl)-N'-(2'-hydroxy-5'-amino-3'-sulfophenyl)-ms-phenyl-formazan | desgl. |
| 4 | N-(2-Carboxy-5-sulfophenyl)-N'-(2'-hydroxy-5'-amino-3'-sulfophenyl)-ms-(4"-sulfophenyl)-formazan | desgl. |
| 5 | N-(2-Carboxy-4-sulfophenyl)-N'-(2'-hydroxy-5'-amino-3'-sulfophenyl)-ms-(4"-sulfophenyl)-formazan | desgl. |

Fortsetzung

| Nr. | Aminoformazan Cu-Komplex | Amin |
|---|---|---|
| 6 | N-(2-Carboxy-5-sulfophenyl)-N'-(2'-hydroxy-3'-amino-5'-sulfophenyl)-ms-(4"-methoxyphenyl)-formazan | β-(β-Chloräthyl-sulfonyl)-äthyl-amin |
| 7 | N-(2-Carboxy-4-sulfophenyl)-N'-(2'-hydroxy-3'-amino-5'-sulfophenyl)-ms-(2"-chlor-5"-sulfophenyl)-formazan | Bis-[β-(β-chloräthyl-sulfonyl)-äthyl]-amin |
| 8 | N-(2-Carboxy-4-aminophenyl)-N'-(2'-hydroxy-3',5'-di-sulfonylphenyl)-ms-(3"-sulfophenyl)-formazan | β-(β-Chloräthyl-sulfonyl)-äthyl-amin |
| 9 | N-(2-Carboxy-4-aminophenyl)-N'-(2'-hydroxy-3',5'-di-sulfonylphenyl)-ms-(2"-sulfophenyl)-formazan | desgl. |
| 10 | N-(2-Carboxy-4-aminophenyl)-N'-(2'-hydroxy-5'-methyl-sulfonyl-3'-sulfophenyl)-ms-(2"-sulfophenyl)-formazan | desgl. |
| 11 | N-(2-Carboxy-5-sulfophenyl)-N'-(2'-hydroxy-3',5'-di-sulfophenyl)-ms-(3"-aminophenyl)-formazan | desgl. |
| 12 | N-(2-Carboxy-5-sulfophenyl)-N'-(2'-hydroxy-4'-methyl-sulfophenyl-6'-sulfophenyl)-ms-(3"-aminophenyl)-formazan | desgl. |
| 13 | N-(2-Carboxy-4-aminophenyl)-N'-(2'-hydroxy-4'-sulfo-naphth-1'-yl)-ms-(2"-sulfophenyl)-formazan | desgl. |
| 14 | N-(2-Hydroxy-3-amino-5-sulfophenyl)-N'-(2'-hydroxy-4'-sulfophenyl)-ms-(2"-sulfophenyl)-formazan | desgl. |
| 15 | N-(2-Hydroxy-3-amino-5-sulfophenyl)-N'-(2'-hydroxy-3',5'-disulfophenyl)-ms-phenyl-formazan | desgl. |
| 16 | N-(2-Hydroxy-5-sulfophenyl)-N'-(2'-hydroxy-3',5'-di-sulfophenyl)-ms-(4"-aminophenyl)-formazan | desgl. |
| 17 | N-(2-Hydroxy-3-amino-5-sulfophenyl)-N'-(2'-hydroxy-3',5'-disulfophenyl)-ms-phenyl-formazan | Bis-[β-(β-chloräthyl-sulfonyl)-äthyl]-amin |
| 18 | N-(2-Hydroxy-3-amino-5-sulfophenyl)-N'-(2'-hydroxy-3',5'-disulfophenyl)-ms-(4"-sulfophenyl)-formazan | β-(β-Chloräthyl)-sulfonyl)-äthyl-amin |
| 19 | N-(2-Hydroxy-5-amino-3-sulfophenyl)-N'-(2',5'-disulfo-phenyl)-ms-phenyl-formazan | desgl. |
| 20 | N-(2-Hydroxy-4,6-disulfophenyl)-N'-(2',4'-disulfophenyl)-ms-(3"-aminophenyl)-formazan | desgl. |
| 21 | N-(2-Hydroxy-4-sulfophenyl)-N'-(4'-amino-2'-sulfo-phenyl)-ms-(4"-chlor-3"-sulfophenyl)-formazan | desgl. |

## Beispiel 22

26,5 g 1-Amino-4-(2',4',6'-trimethyl-3'-aminophenyl-amino)-anthrachinon-2,5'-disulfonsäure werden bei 20°C in 500 ml Wasser neutral gelöst. Nach Abkühlen auf 0°C tropft man 7,1 g 2,4,6-Trifluor-1,3,5-triazin in 30 Minuten ein, wobei durch gleichzeitige Zugabe von 2 N-Natriumhydroxydlösung ein pH-Wert von 5 eingehalten wird. Sobald kein Ausgangsfarbstoff mehr nachweisbar ist, werden der Reaktionslösung 10,8 g β-(β-Chloräthyl-sulfonyl)-äthyl-amin-hydrochlorid zugefügt. Man läßt die Temperatur auf 20°C ansteigen und neutralisiert den freiwerdenden Fluorwasserstoff mit 2 N-Natriumcarbonatlösung, indem man einen pH-Wert von 6 einhält. Nach beendeter Acylierung wird der Farbstoff

der Formel

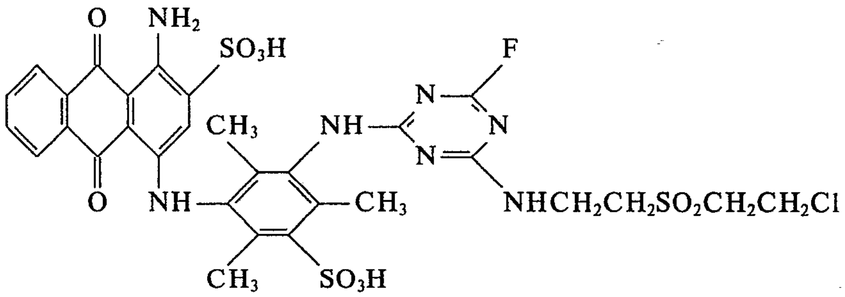

mit Kaliumchlorid ausgesalzen. Nach dem Absaugen, Trocknen und Mahlen erhält man ein blaues Farbstoffpulver, das sich in Wasser mit blauer Farbe löst und Baumwolle wie Zellwolle in brillanten blauen Tönen färbt.

Auf analoge Weise lassen sich durch Umsetzung der in Tabelle 2 angegebenen Anthrachinonkomponenten mit 2,4,6-Trifluor-1,3,5-triazin und Kondensation der erhaltenen Difluortriazinyl-Farbstoffe mit den in Spalte 3 aufgeführten Aminen weitere blaue Reaktivfarbstoffe herstellen.

Tabelle 2

| Nr. | Anthrachinonkomponente | Amin |
|---|---|---|
| 23 | 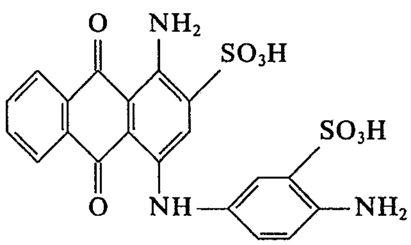 | β-(β-Chloräthyl-sulfonyl)-äthyl-amin |
| 24 | 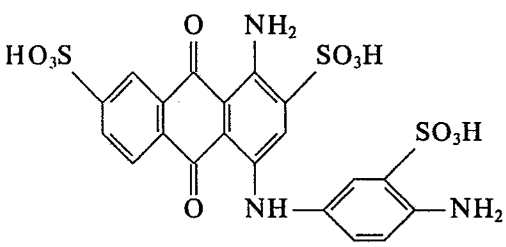 | desgl. |
| 25 | 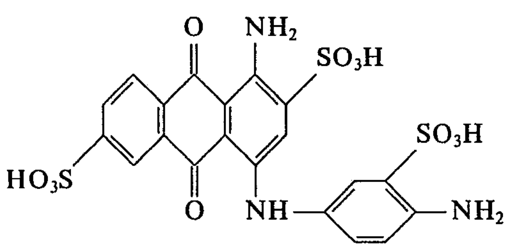 | desgl. |
| 26 | 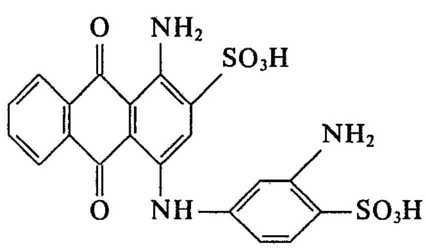 | desgl. |

Fortsetzung

| Nr. | Anthrachinonkomponente | Amin |
|---|---|---|
| 27 | 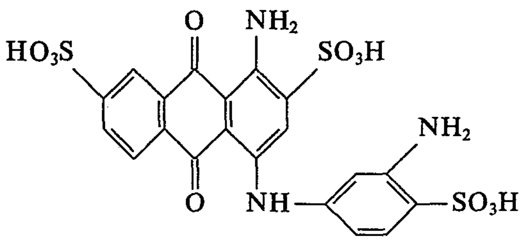 | β-(β-Chloräthyl-sulfonyl)-amin |
| 28 | 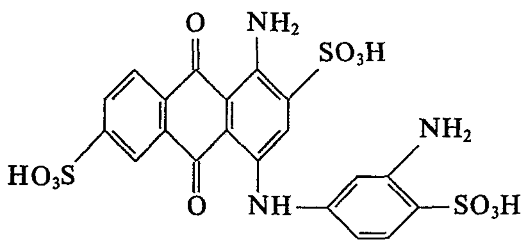 | desgl. |
| 29 | 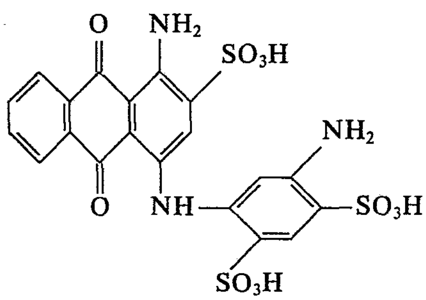 | Bis-[β-(β-chloräthyl-sulfonyl)-äthyl]-amin |
| 30 | 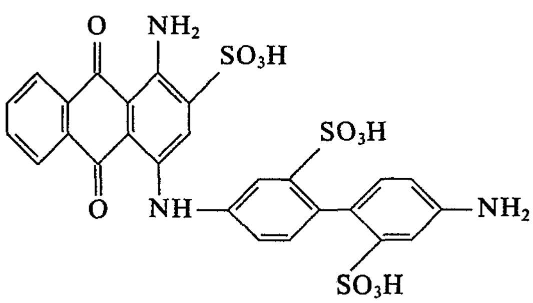 | β-(β-Chloräthyl-sulfonyl)-äthyl-amin |
| 31 | 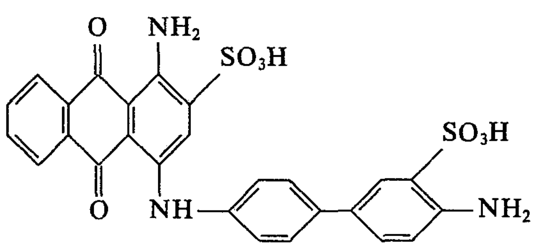 | desgl. |
| 32 | 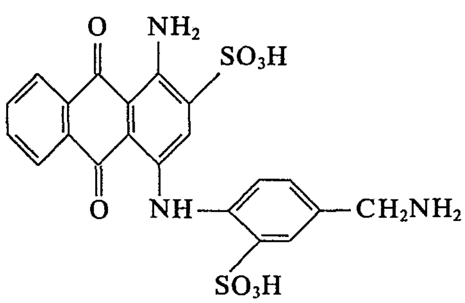 | desgl. |

Fortsetzung

| Nr. | Anthrachinonkomponente | Amin |
|---|---|---|
| 33 | 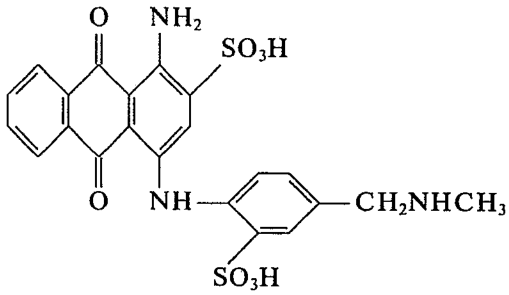 | β-(β-Chloräthyl-sulfonyl)-äthyl-amin |
| 34 | 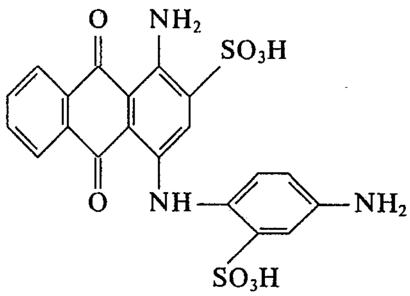 | desgl. |
| 35 | 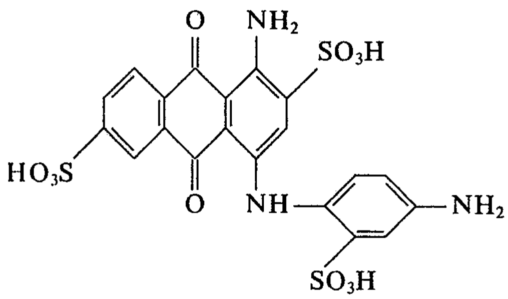 | desgl. |
| 36 | 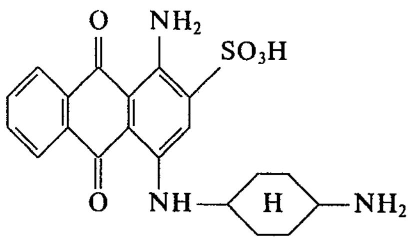 | desgl. |
| 37 | 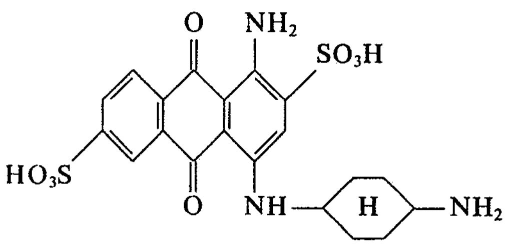 | desgl. |
| 38 | 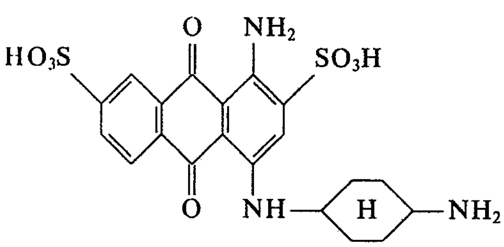 | desgl. |

Fortsetzung

| Nr. | Anthrachinonkomponente | Amin |
|---|---|---|
| 39 | 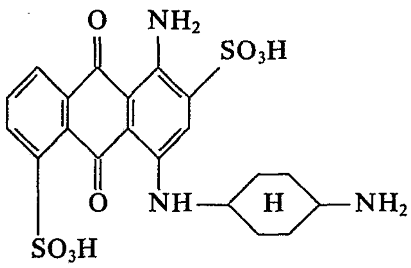 | β-(β-Chloräthyl-sulfonyl)-äthyl-amin |
| 40 | 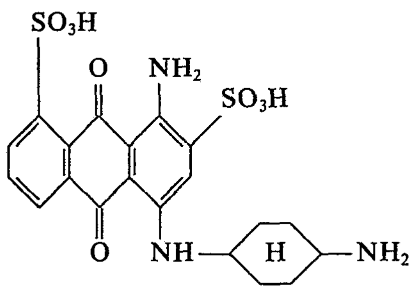 | desgl. |
| 41 | 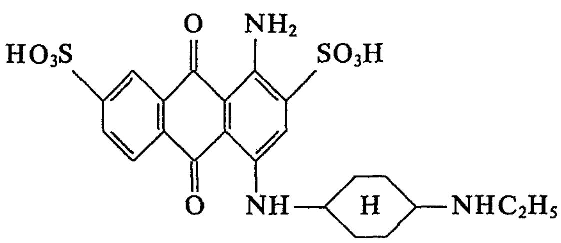 | desgl. |
| 42 | 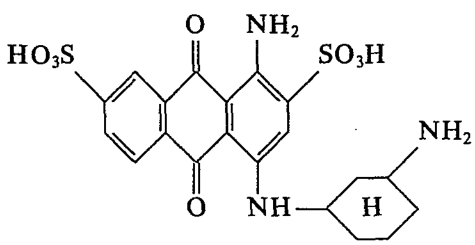 | desgl. |
| 43 | 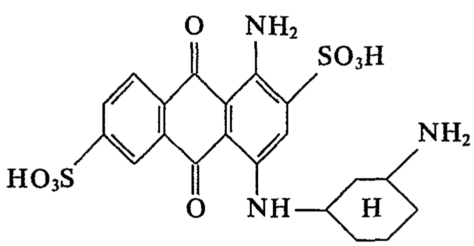 | desgl. |
| 44 | 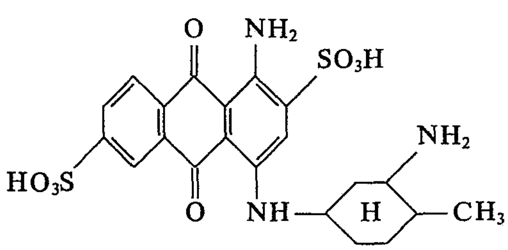 | desgl. |

Fortsetzung

| Nr. | Anthrachinonkomponente | Amin |
| --- | --- | --- |
| 45 | 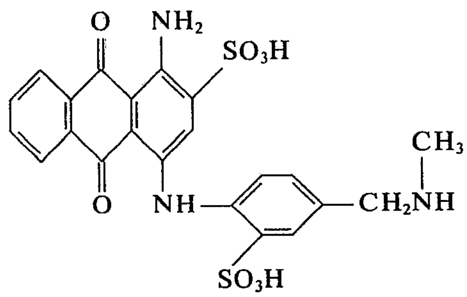 | β-(β-Chloräthyl-sulfonyl)-äthyl-amin |
| 46 | 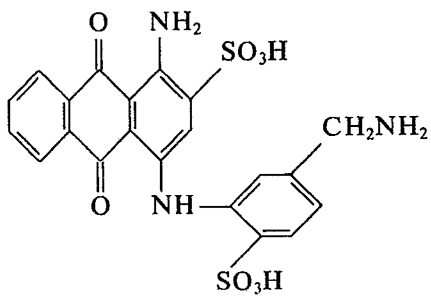 | desgl. |
| 47 | 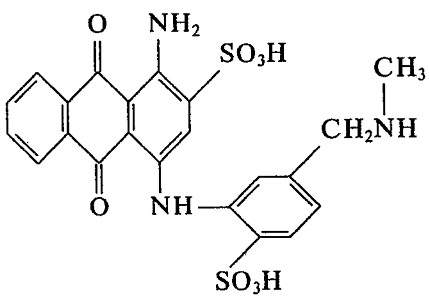 | desgl. |
| 48 | 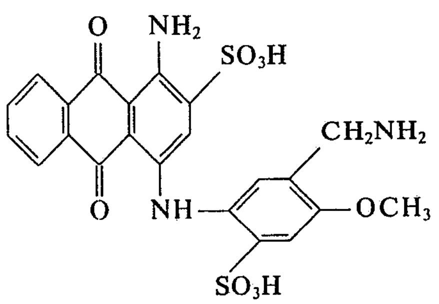 | desgl. |
| 49 | 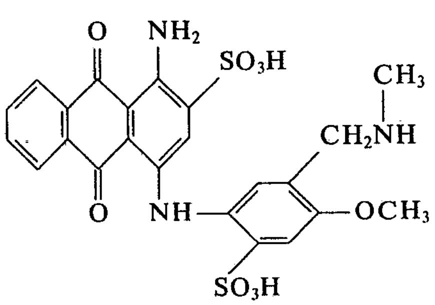 | desgl. |

Fortsetzung

| Nr. | Anthrachinonkomponente | Amin |
|---|---|---|
| 50 | 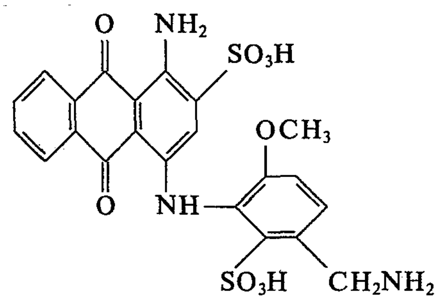 | β-(β-Chloräthyl-sulfonyl)-äthyl-amin |
| 51 | 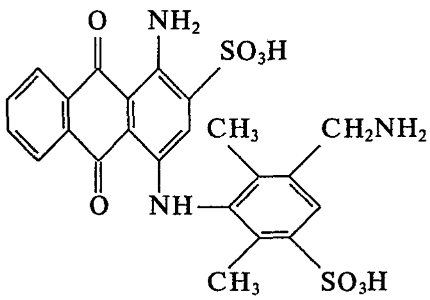 | desgl. |
| 52 | 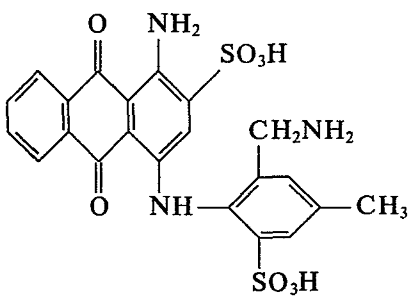 | desgl. |
| 53 | 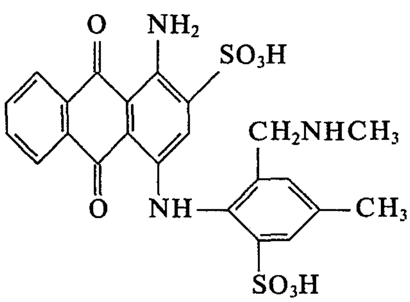 | desgl. |
| 54 | 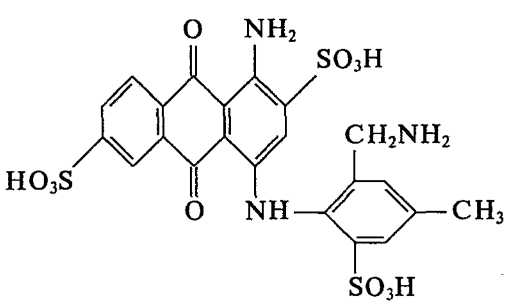 | desgl. |

Fortsetzung

| Nr. | Anthrachinonkomponente | Amin |
|---|---|---|
| 55 | 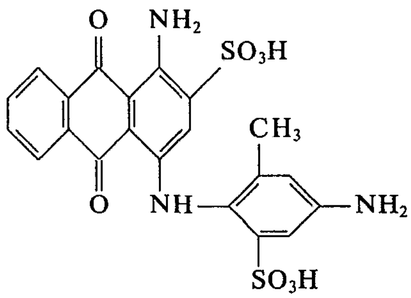 | β-(β-Chloräthyl-sulfonyl)-äthyl-amin |
| 56 | 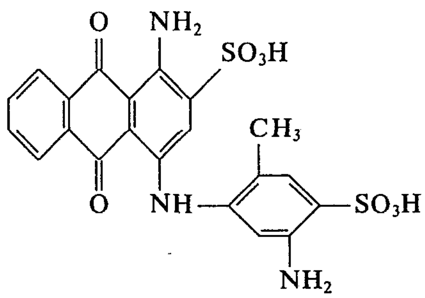 | desgl. |
| 57 | 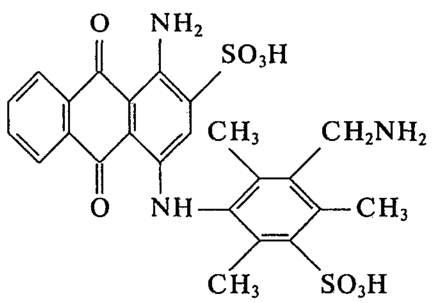 | desgl. |
| 58 | 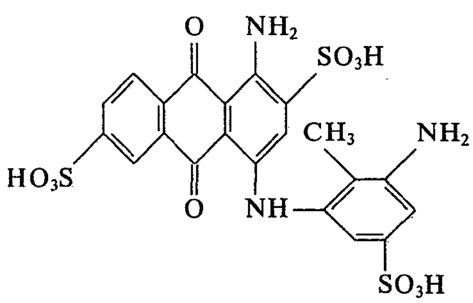 | desgl. |
| 59 | 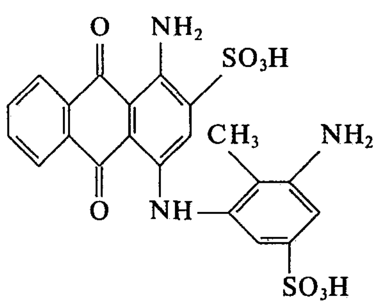 | desgl. |

Fortsetzung

| Nr. | Anthrachinonkomponente | Amin |
| --- | --- | --- |
| 60 | 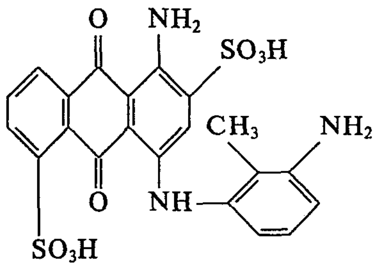 | β-(β-Chloräthyl-sulfonyl)-äthyl-amin |
| 61 | 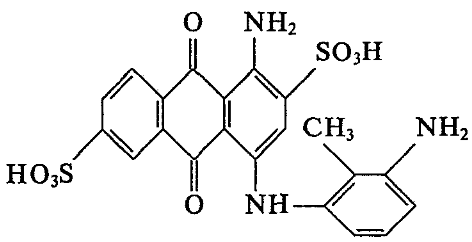 | desgl. |
| 62 | 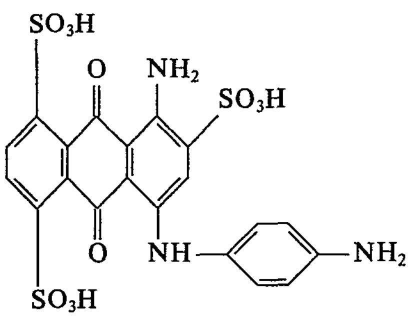 | desgl. |
| 63 | 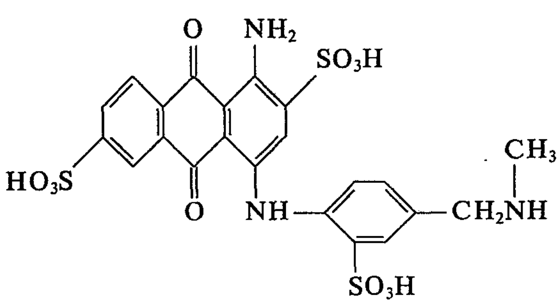 | desgl. |
| 64 | 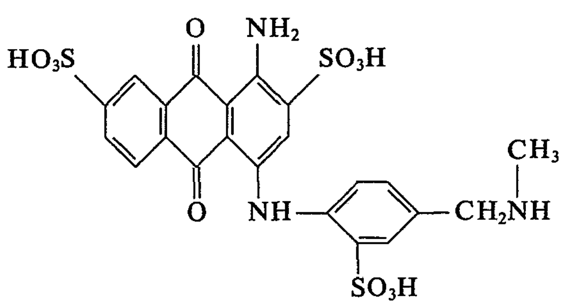 | desgl. |

Fortsetzung

| Nr. | Anthrachinonkomponente | Amin |
|---|---|---|
| 65 | 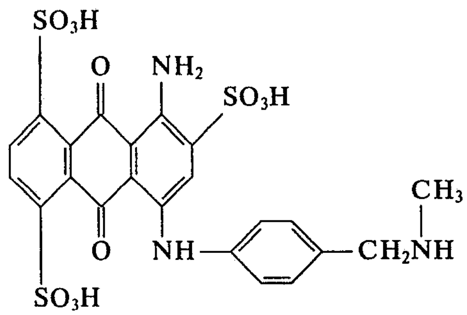 | β-(β-Chloräthyl-sulfonyl)-äthyl-amin |
| 66 | 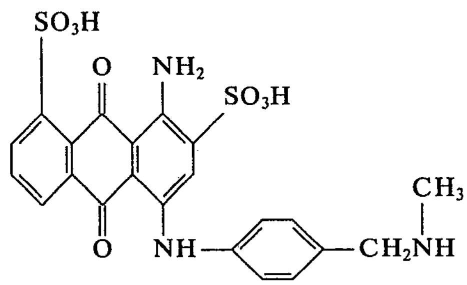 | desgl. |
| 67 | 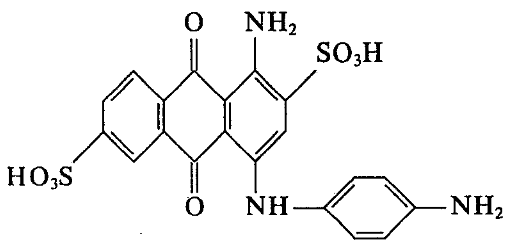 | desgl. |
| 68 | 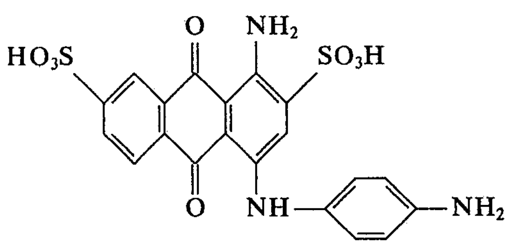 | desgl. |
| 69 | 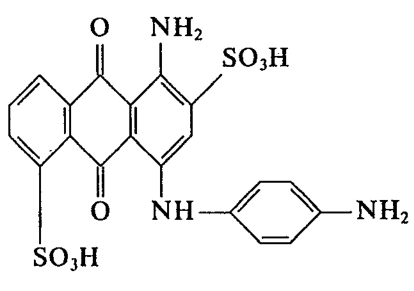 | desgl. |
| 70 | 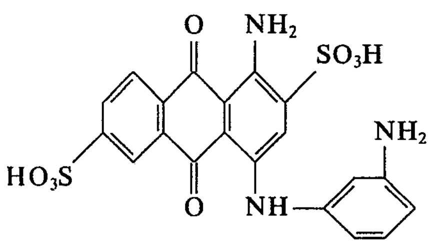 | desgl. |

Fortsetzung

| Nr. | Anthrachinonkomponente | Amin |
|---|---|---|
| 71 | 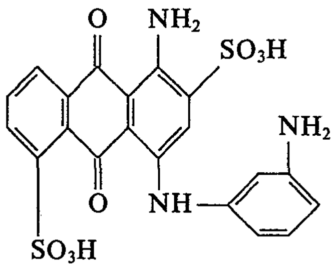 | β-(β-Chloräthyl-sulfonyl)-äthyl-amin |
| 72 | 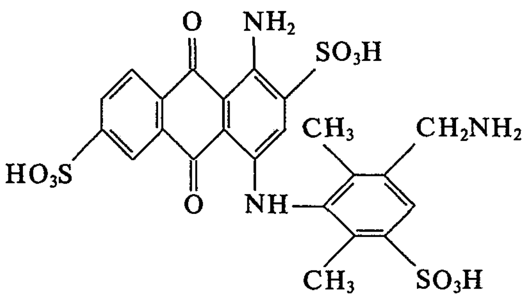 | desgl. |
| 73 | 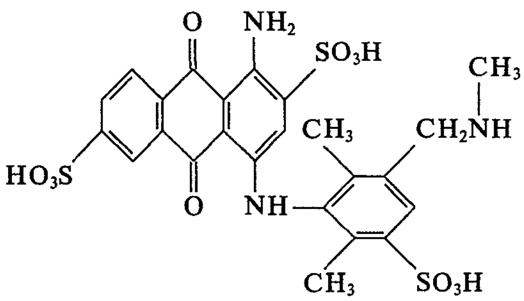 | desgl. |
| 74 | 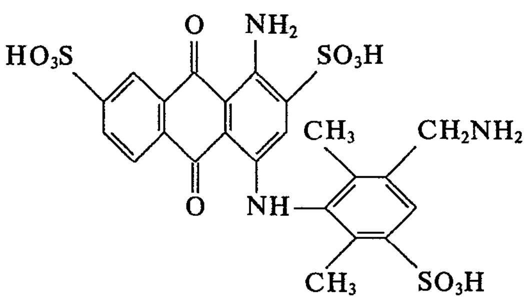 | desgl. |
| 75 | 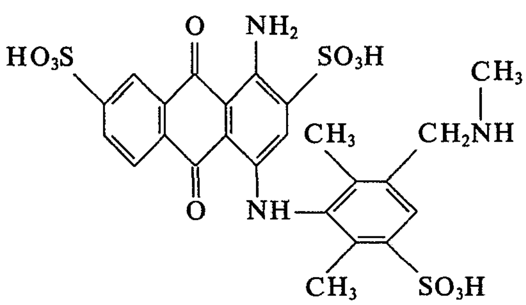 | desgl. |

Fortsetzung

| Nr. | Anthrachinonkomponente | Amin |
|---|---|---|
| 76 | 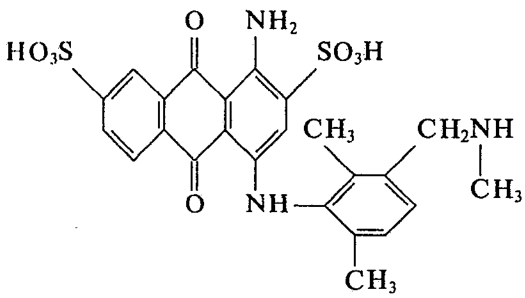 | β-(β-Chloräthyl-sulfonyl)-äthyl-amin |
| 77 | 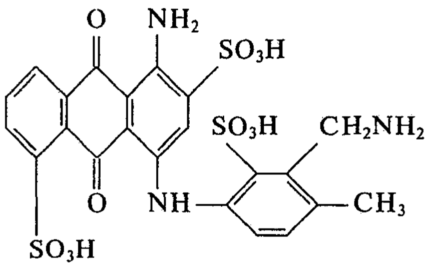 | desgl. |
| 78 | 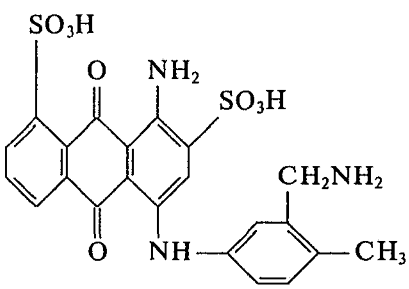 | desgl. |
| 79 | 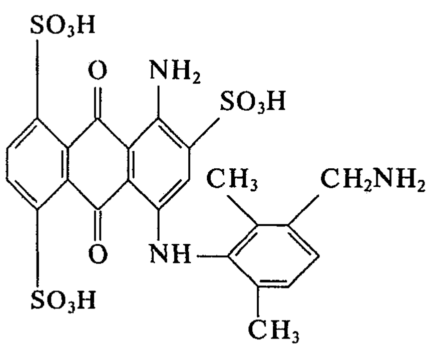 | desgl. |
| 80 | 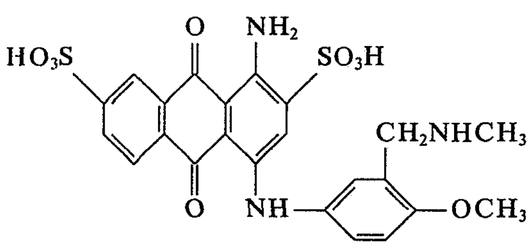 | desgl. |

Fortsetzung

| Nr. | Anthrachinonkomponente | Amin |
|---|---|---|
| 81 | 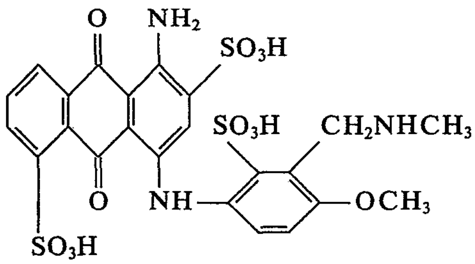 | β-(β-Chloräthyl-sulfonyl)-äthyl-amin |
| 82 | 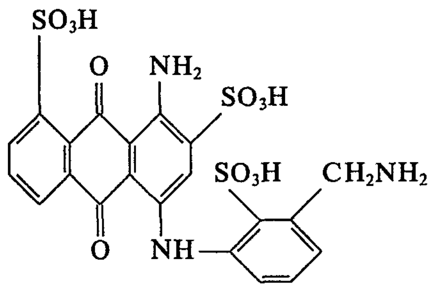 | desgl. |
| 83 | 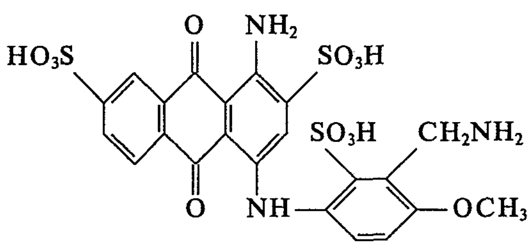 | desgl. |
| 84 | 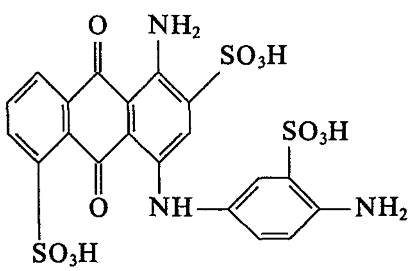 | desgl. |
| 85 | 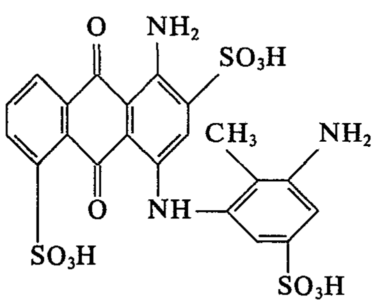 | desgl. |
| 86 | 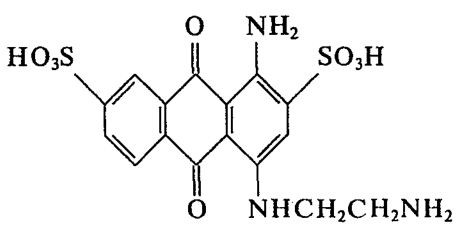 | desgl. |

Fortsetzung

| Nr. | Anthrachinonkomponente | Amin |
|---|---|---|
| 87 | 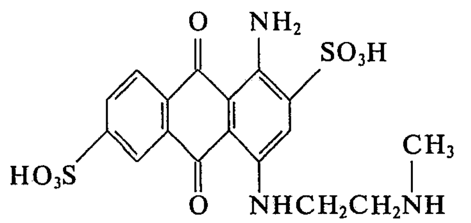 | β-(β-Chloräthyl-sulfonyl)-äthyl-amin |
| 88 | 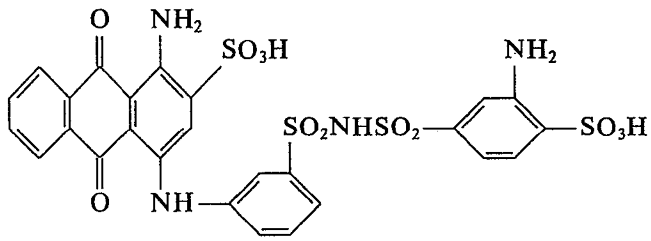 | desgl. |
| 89 | 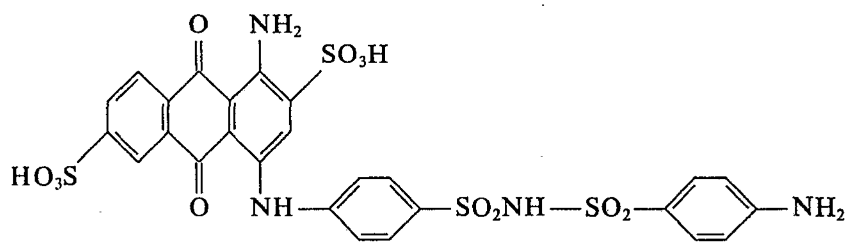 | desgl. |
| 90 | 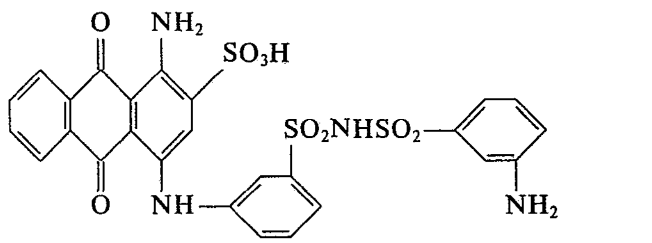 | desgl. |

Beispiel 91

50,3 g des Farbstoffes 3-(3-Amino-4-sulfophenylaminosulfonyl)-kupferphthalocyanin-3′,3″,3‴-trisulfonsäure werden in 500 ml Wasser neutral gelöst. Bei 0—3°C läßt man unter Einhalten eines pH-Wertes von 6—7 7,1 g 2,4,6-Trifluor-1,3,5-triazin innert 30 Minuten zutropfen. Sobald keine freien Aminogruppen mehr nachweisbar sind, werden 10,8 g β-(β-Chloräthyl-sulfonyl)-äthyl-amin-hydrochlorid eingetragen. Der pH-Wert wird während der Umsetzung mit 2 N-Natriumcarbonatlösung bei 5 gehalten und die Temperatur allmählich auf 20°C erhöht. Nach beendigter Kondensation wird der so erhaltene Reaktivfarbstoff der Formel

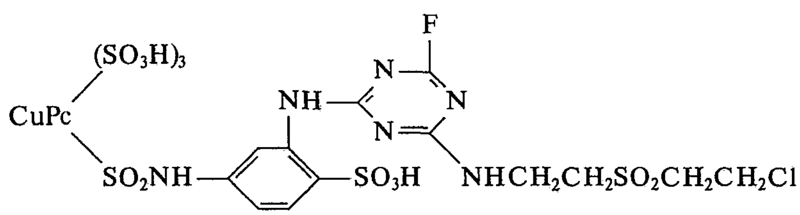

mit Natriumchlorid ausgesalzen, filtriert und getrocknet. Er stellt ein blaues, in Wasser mit türkisblauer Farbe lösliches Pulver dar, und färbt Baumwolle und Regeneratcellulose in türkisblauen Tönen.

In analoger Weise erhält man weitere wertvolle türkisblaue Reaktivfarbstoffe, wenn man die in Spalte 2 der nachfolgenden Tabelle 7 genannten Aminophthalocyanin-Derivate gemäß den Angaben des Beispiels 353 mit 2,4,6-Trifluor-1,3,5-triazin kondensiert und anschließend mit den in Spalte 3 genannten Aminen umsetzt.

Tabelle 3

| Nr. | Aminophthalocyanin-Derivat | Amin |
|---|---|---|
| 92 | 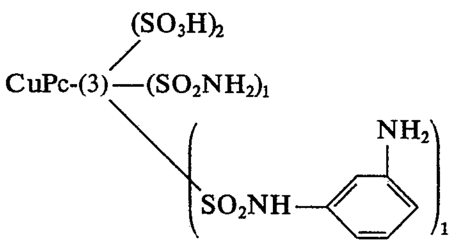 | β-(β-Chloräthyl-sulfonyl)-äthyl-amin |
| 93 | 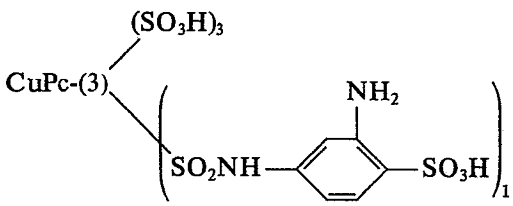 | Bis-[β-(β-chloräthyl-sulfonyl)-äthyl]-amin |
| 94 | 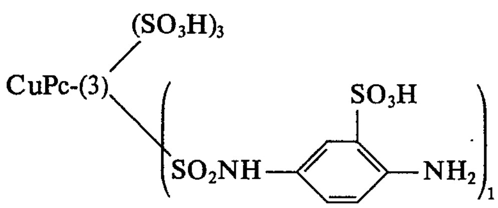 | β-(β-Chloräthyl-sulfonyl)-äthyl-amin |
| 95 | 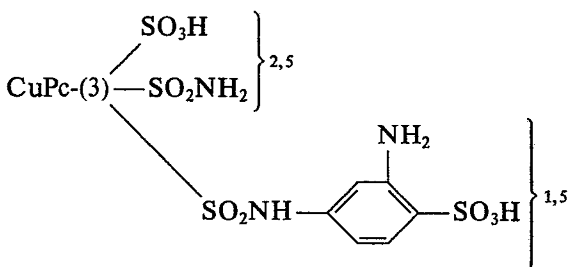 | desgl. |
| 96 | 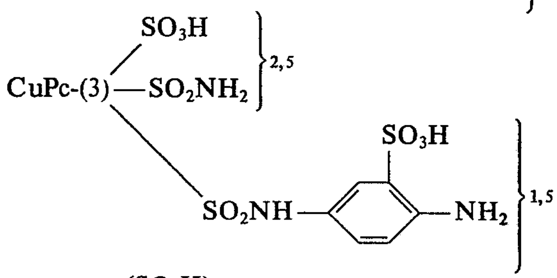 | desgl. |
| 97 | 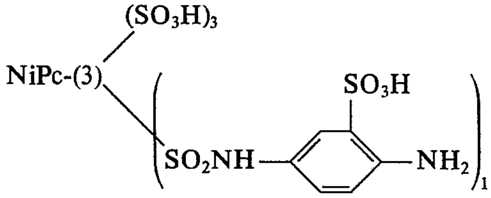 | desgl. |
| 98 | 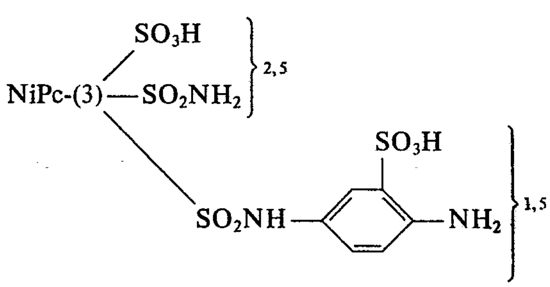 | desgl. |

Fortsetzung

| Nr. | Aminophthalocyanin-Derivat | Amin |
|---|---|---|
| 99 | 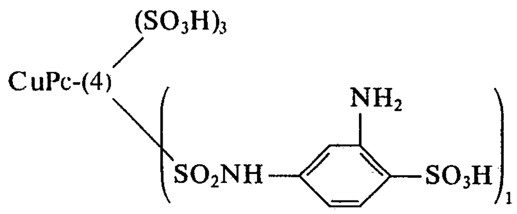 | β-(β-Chloräthyl-sulfonyl)-äthyl-amin |
| 100 | 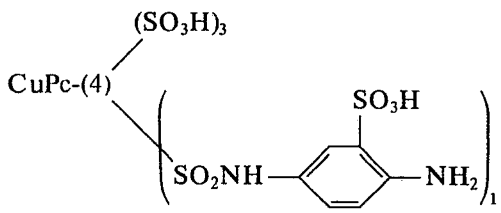 | desgl. |
| 101 | 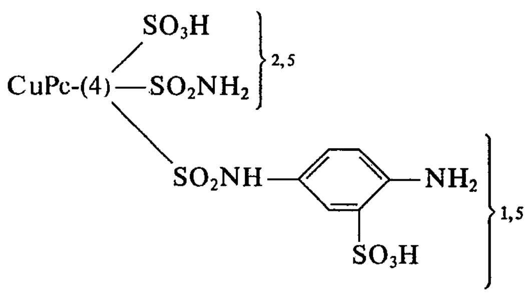 | desgl. |
| 102 | 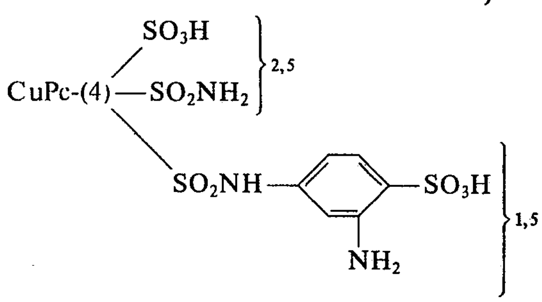 | desgl. |
| 103 | 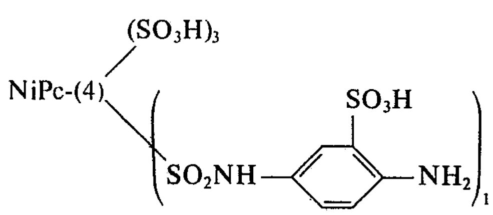 | desgl. |
| 104 | 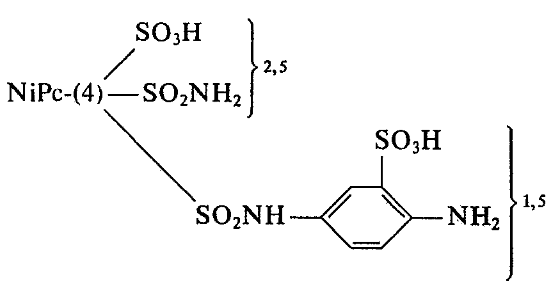 | desgl. |

Fortsetzung

| Nr. | Aminophthalocyanin-Derivat | Amin |
| --- | --- | --- |
| 105 | 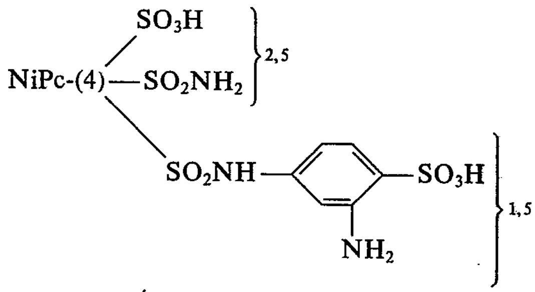 | β-(β-Chloräthyl-sulfonyl)-äthyl-amin |
| 106 | 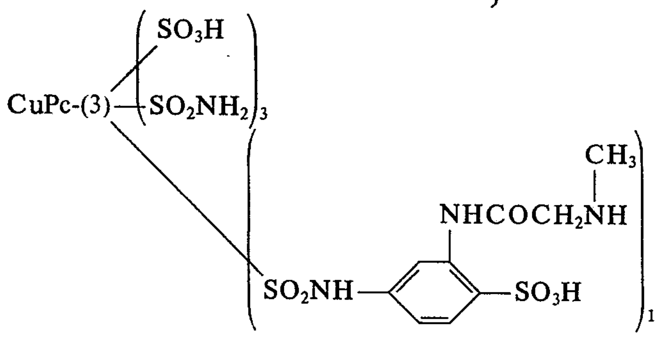 | desgl. |
| 107 | 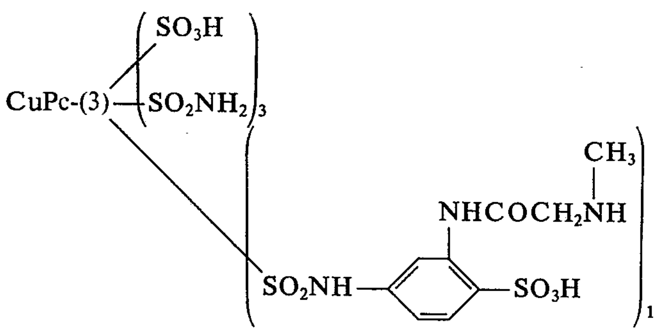 | desgl. |
| 108 | 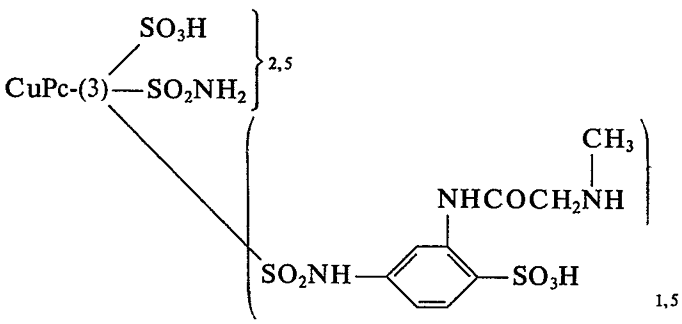 | desgl. |
| 109 | 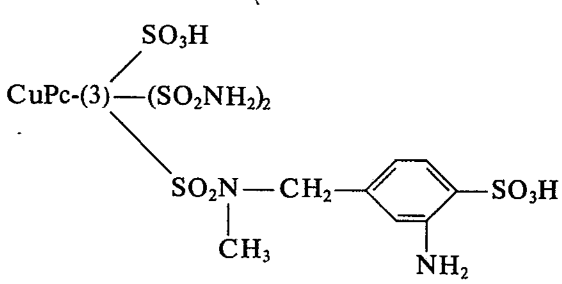 | desgl. |

Fortsetzung

| Nr. | Aminophthalocyanin-Derivat | Amin |
|---|---|---|
| 110 | 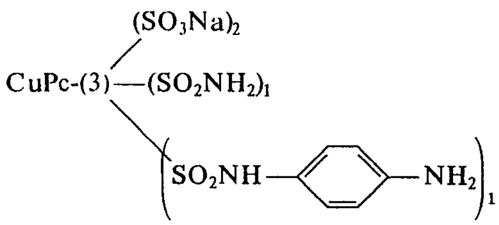 | β-(β-Chloräthyl-sulfonyl)-äthyl-amin |
| 111 | 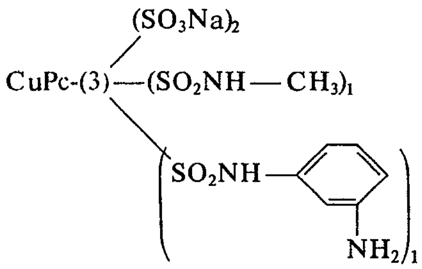 | desgl. |
| 112 | 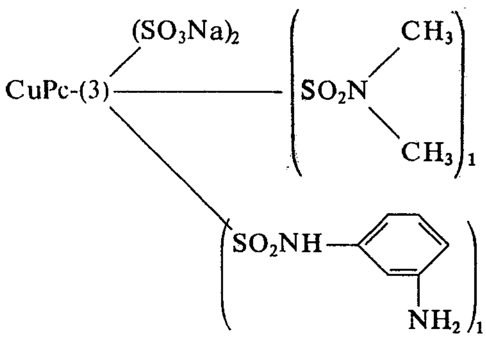 | desgl. |
| 113 | 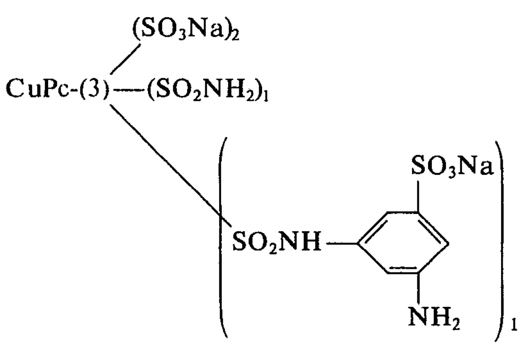 | desgl. |
| 114 | 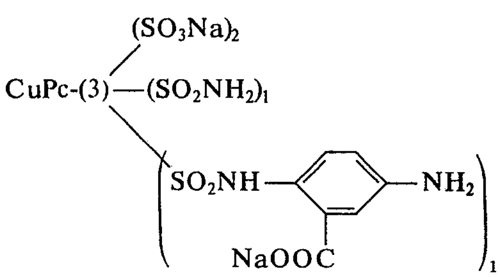 | desgl. |

Fortsetzung

| Nr. | Aminophthalocyanin-Derivat | Amin |
| --- | --- | --- |
| 115 | 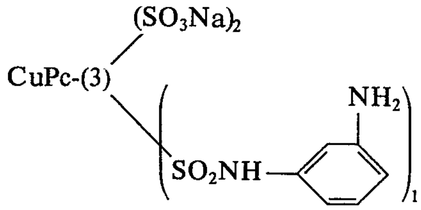 | β-(β-Chloräthyl-sulfonyl)-äthyl-amin |
| 116 | 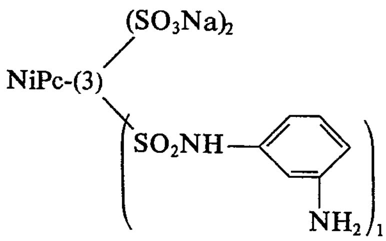 | desgl. |
| 117 | 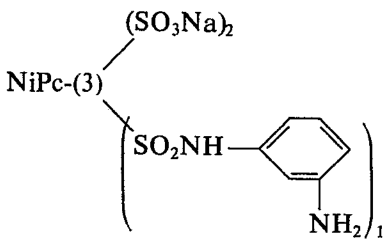 | desgl. |
| 118 | 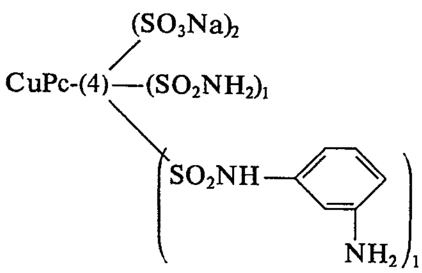 | desgl. |
| 119 | 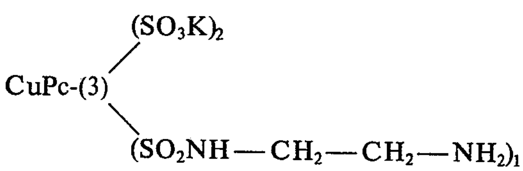 | desgl. |
| 120 | 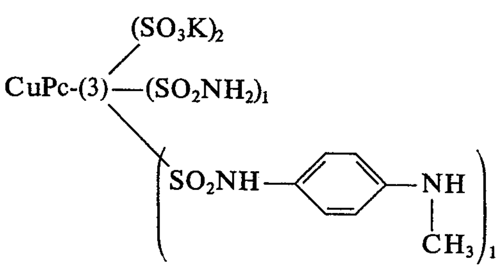 | desgl. |
| 121 | 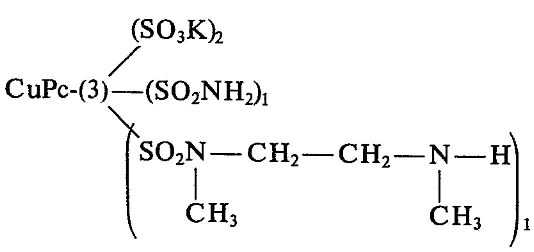 | desgl. |

Fortsetzung

| Nr. | Aminophthalocyanin-Derivat | Amin |
|---|---|---|
| 122 | 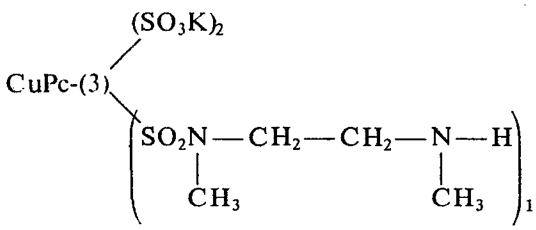 | β-(β-Chloräthyl-sulfonyl)-äthyl-amin |
| 123 | 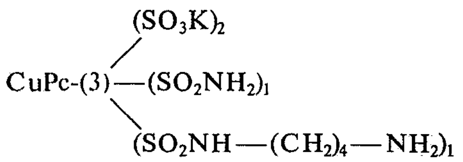 | desgl. |
| 124 | 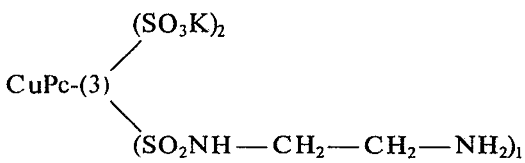 | desgl. |
| 125 | 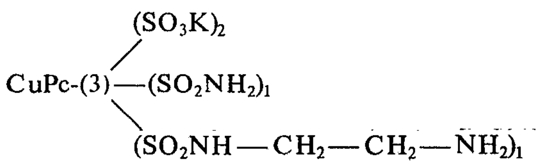 | desgl. |
| 126 | 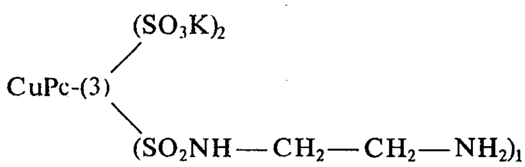 | desgl. |
| 127 | 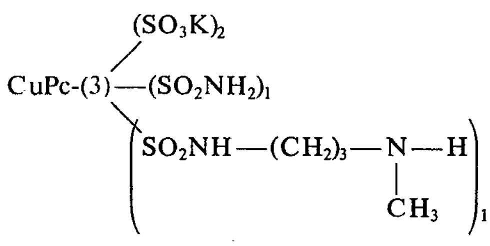 | desgl. |
| 128 | 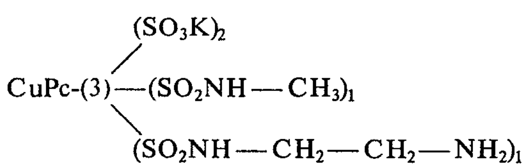 | desgl. |

Beispiel 129

5,5 g der nach den Angaben in der Deutschen Auslegeschrift 2 124 080 hergestellten Dioxazinverbindung der Formel

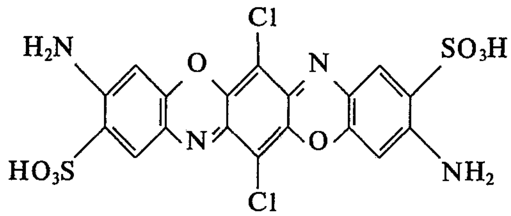

werden in 500 ml Wasser neutral gelöst. Bei 0°C werden 2,9 g 2,4,6-Trifluor-1,3,5-triazin eingetropft, wobei gleichzeitig 2 N-Natriumhydroxydlösung zugegeben wird, um den pH-Wert bei 5—6 zu halten. Nach Zugabe des 2,4,6-Trifluor-1,3,5-triazins rührt man noch 5 bis 10 Minuten nach und gibt dann 4,4 g β-(β-Chloräthyl-sulfonyl)-äthyl-amin-hydrochlorid zu. Man läßt die Temperatur auf 20°C ansteigen und hält dabei den pH bei 4,5—5,5 durch Zugabe von 2 N-Natriumcarbonatlösung. Die Acylierung ist beendet, wenn kein Alkali mehr verbraucht wird. Der Farbstoff wird durch Zugabe von Natriumchlorid abgeschieden. Nach dem Absaugen, Trocknen und Mahlen erhält man ein blaues Farbstoffpulver, das sich in Wasser mit blauer Farbe löst. In Form der freien Säure entspricht der Farbstoff der folgenden Formel

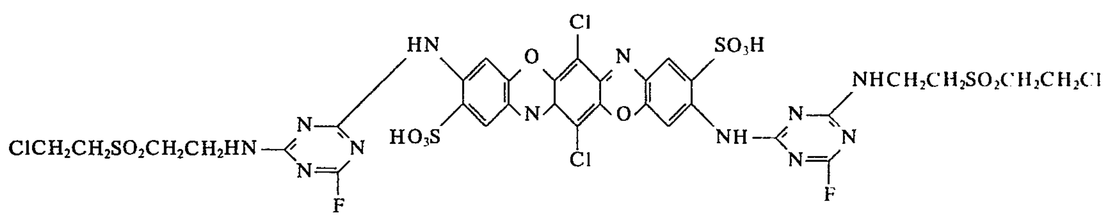

Wenn man nach den Angaben dieses Beispiels verfährt, jedoch anstelle des dort verwendeten Dioxazinfarbstoffes äquivalente Mengen eines der nachfolgend aufgeführten Dioxazin-Chromophore verwendet, so resultieren gleichfalls wertvolle Farbstoffe.

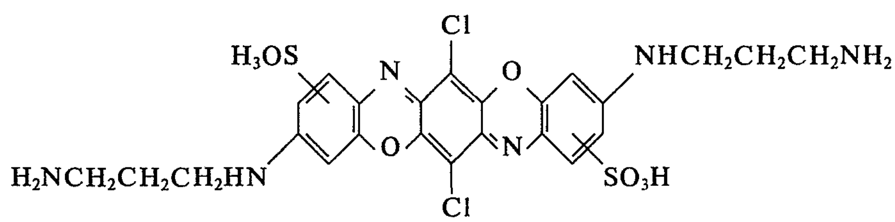

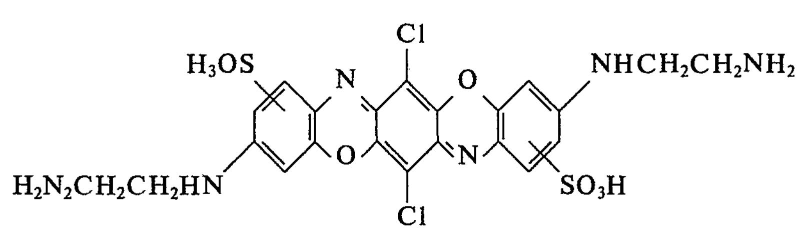

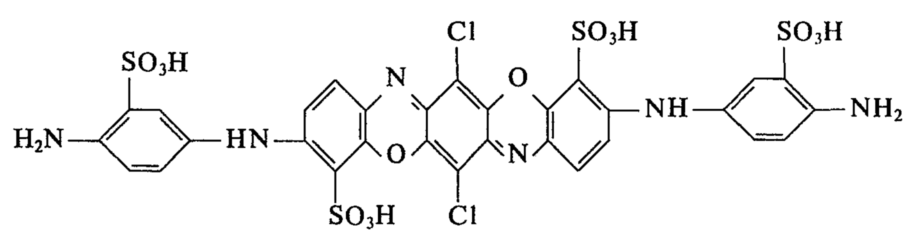

Ähnliche gute Farbstoffe erhält man, wenn man in den vorangegangenen Beispielen statt der dort angegebenen Amine eines der folgenden verwendet:

β-(β-Bromäthyl-sulfonyl)-äthyl-amin

β-Vinylsulfonyl-äthyl-amin
γ-(β-Chloräthyl-sulfonyl)-propyl-amin
β-(β-Chloräthyl-sulfonyl)-äthyl-amin
δ-(β-Chloräthyl-sulfonyl)-butyl-amin
N-Carboxymethyl-N-β-(β-chloräthyl-sulfonyl)-äthyl-amin
N-γ-Chlorpropyl-N-β-(β-chloräthyl-sulfonyl)-äthyl-amin
Bis-[β-(β-chloräthyl-sulfonyl)-äthyl]-amin
N-β-Sulfatoäthyl-N-γ-(β-chloräthyl-sulfonyl)-propyl-amin
N-β-Carboxyäthyl-N-γ-(β-chloräthyl-sulfonyl)-propyl-amin
N-β-Sulfatoäthyl-N-β-(β-chloräthyl-sulfonyl)-äthyl-amin
α-(β-Chloräthyl-sulfonyl)-isopropyl-amin
N-Methyl-N-β-(β-chloräthyl-sulfonyl)-äthyl-amin
N-o-Methylphenyl-N-β-(β-chloräthyl-sulfonyl)-äthyl-amin
Bis-[δ-(β-chloräthyl-sulfonyl)-butyl-amin
N-Butyl-N-β-(β-chloräthyl-sulfonyl)-äthyl-amin
N-Phenyl-N-β-(β-chloräthyl-sulfonyl)-äthyl-amin
N-p-Chlorphenyl-N-β-(β-chloräthyl-sulfonyl)-äthyl-amin
N-Äthyl-N-β-(β-chloräthyl-sulfonyl)-äthyl-amin
N-m-Sulfophenyl-N-β-(β-chloräthyl-sulfonyl)-äthyl-amin
β-(β-Chloräthyl-sulfonyl)-isobutyl-amin
Bis-[γ-(β-Chloräthyl-sulfonyl)-propyl]-amin

## Färbevorschrift I

2 Teile des gemäß Beispiel 1 erhaltenen Farbstoffes werden unter Zusatz von 0,5 Teilen m-nitrobenzolsulfonsaurem Natrium in 100 Teile Wasser gelöst. Mit der erhaltenen Lösung wird ein Baumwollgewebe imprägniert, so daß es um 75% seines Gewichtes zunimmt, und dann getrocknet.

Danach imprägniert man das Gewebe mit einer 20°C warmen Lösung, die pro Liter 5 Gramm Natriumhydroxyd und 300 Gramm Natriumchlorid enthält, quetscht auf 75% Gewichtszunahme ab, dämpft die Färbung während 30 Sekunden bei 100 bis 101 °C, spült, seift während einer Viertelstunde in einer 0,3%igen kochenden Lösung eines ionenfreien Waschmittels, spült und trocknet.

## Färbevorschrift II

2 Teile des gemäß Beispiel 1 erhältlichen Farbstoffes werden in 100 teile Wasser gelöst.

Die Lösung gibt man zu 1900 Teilen kaltem Wasser, fügt 60 Teile Natriumchlorid zu und geht mit 100 Teilen eines Baumwollgewebes in dieses Färbebad ein.

Man steigert die Temperatur auf 40°C, wobei nach 30 Minuten 40 Teile kalzinierte Soda und nochmals 60 Teile Natriumchlorid zugegeben werden. Man hält die Temperatur 30 Minuten auf 40°C, spült und seift dann die Färbung während 15 Minuten in einer 0,3%igen kochenden Lösung eines ionenfreien Waschmittels, spült und trocknet.

## Druckvorschrift

2 Teile des gemäß Beispiel 1 hergestellten Farbstoffes werden unter schnellem Rühren in 100 Teile einer Stammverdickung, enthaltend 45 Teile 5%ige Natriumalginatverdickung, 32 Teile Wasser, 20 Teile Harnstoff, 1 Teil m-nitrobenzolsulfonsaures Natrium sowie 2 Teile Natriumcarbonat, eingestreut.

Mit der so erhaltenen Druckpaste bedruckt man ein Baumwollgewebe auf einer Rouleauxdruckmaschine, trocknet und dämpft den erhaltenen bedruckten Stoff 2 bis 8 Minuten bei 100°C in gesättigtem Dampf. Das bedruckte Gewebe wird dann in kaltem und heißem Wasser gründlich gespült, wobei sich die nicht chemisch fixierten Anteile sehr leicht von der Faser entfernen lassen, und anschließend getrocknet.

## Patentansprüche

1. Reaktivfarbstoffe der Formel

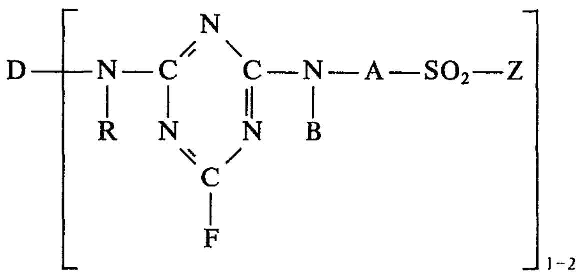

(1)

worin D der Rest eines organischen Farbstoffes der Anthrachinon-, Phthalocyanin-, Formazan-, Azomethin-, Dioxazin-, Phenazin-, Triphenylmethan-, Xanthen-, Thioxanthon-, Nitroaryl-, Naphthochinon-, Pyrenchinon- oder Perylentetracarbimid-Reihe, R Wasserstoff oder gegebenenfalls substituiertes $C_{1-4}$-Alkyl, A $C_{2-6}$-Alkylen, Z $\beta$-Halogenäthyl oder Vinyl und B Wasserstoff oder der Rest eines gegebenenfalls substituierten Kohlenwasserstoffs ist.

2. Reaktivfarbstoffe gemäß Anspruch 1, worin D, R, A und Z die in Anspruch 1 angegebenen Bedeutungen haben, und B Wasserstoff oder $C_{1-4}$-Alkyl ist.

3. Reaktivfarbstoffe gemäß Anspruch 1, worin D, R, A und Z die in Anspruch 1 angegebenen Bedeutungen haben, und B ein Rest der Formel

$$—A—SO_2—Z \qquad (2)$$

ist, worin A und Z die in Anspruch 1 angegebenen Bedeutungen haben.

4. Reaktivfarbstoffe gemäß Anspruch 1, worin D, R, Z und B die in Anspruch 1 angegebenen Bedeutungen haben, und A Äthylen ist.

5. Reaktivfarbstoffe gemäß Anspruch 2, der Formel

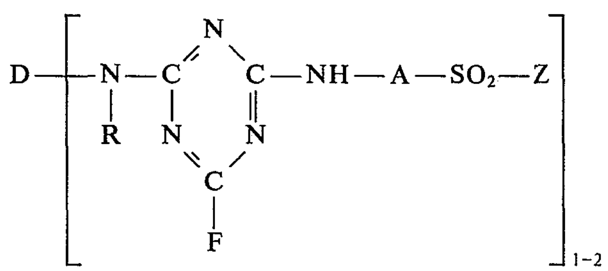

(3)

worin D und Z die in Anspruch 2 angegebenen Bedeutungen haben, R Wasserstoff, Methyl oder Äthyl, und A $C_{2-4}$-Alkylen ist.

6. Reaktivfarbstoffe gemäß Anspruch 5, worin A Äthylen ist.

7. Reaktivfarbstoffe gemäß Anspruch 3, der Formel

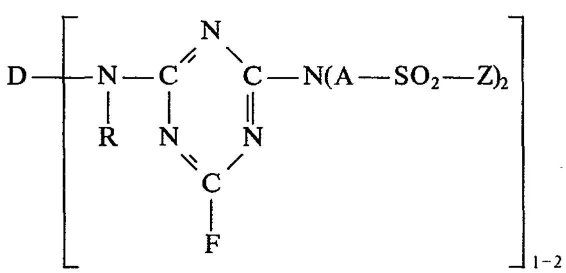

(4)

worin D und Z die in Anspruch 3 angegebenen Bedeutungen haben, R Wasserstoff, Methyl oder Äthyl, und A $C_{2-4}$-Alkylen ist.

8. Reaktivfarbstoffe gemäß Anspruch 7, worin A Äthylen ist.

9. Reaktivfarbstoffe gemäß einem der Ansprüche 1 bis 8, worin D der Rest eines Formazanfarbstoffes ist.

10. Reaktionfarbstoffe gemäß einem der Ansprüche 1 bis 8, worin D der Rest eine Anthrachinon- oder Phthalocyaninfarbstoffes ist.

11. Reaktivfarbstoffe gemäß einem der Ansprüche 1 bis 8, worin D der Rest eines Dioxazinfarbstoffes ist.

12. Verfahren zur Herstellung von reaktivfarbstoffen gemäß Anspruch 1, dadurch gekennzeichnet, daß man organische Farbstoffe der Formel

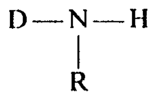 (5)

oder Farbstoffvorprodukte mit mindestens einem Äquivalent 2,4,6-Trifluor-1,3,5-triazin der Formel

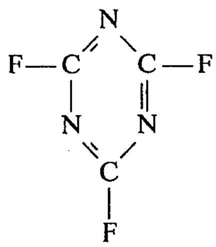 (6)

kondensiert, und das Kondensationsprodukt mit mindestens einem Äquivalent eines Amins der Formel

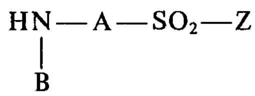 (7)

zu einem Reaktivfarbstoff der Formel (1) kondensiert, wobei D, R, A, Z und B in den Formeln (5) und (7) die in Anspruch 1 angegebenen Bedeutungen haben, und daß man im Falle der Verwendung von Farbstoffvorprodukten, diese in die gewünschten Endfarbstoffe umwandelt.

13. Verwendung der Reaktivfarbstoffe gemäß den Ansprüchen 1 bis 11 bzw. der gemäß Anspruch 12 erhaltenen Reaktivfarbstoffe zum Färben und Bedrucken.

14. Verwendung gemäß Anspruch 13 zum Färben von Cellulosefasern.

## Claims

1. A reactive dye of the formula

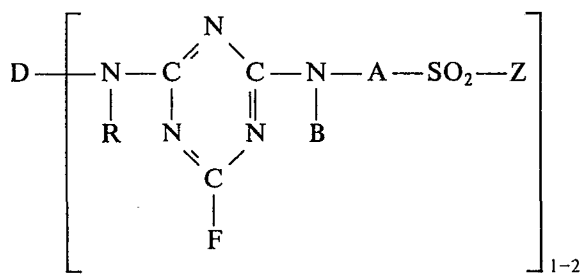 (1)

in which D is the readical of an organic dye of the anthraquinone, phthalocyanine, formazan, azomethine, dioxazine, phenazine, triphenylmethane, xanthene, thioxanthone, nitroaryl, naphthoquinone, pyrenequinone or perylenetetracarbimide series, R is hydrogen or unsubstituted or substituted $C_{1-4}$alkyl, A is $C_{2-6}$alkylene, Z is $\beta$-halogenoethyl or vinyl, and B is hydrogen or the radical of an unsubstituted or substituted hydrocarbon.

2. A reactive dye according to claim 1, in which D, R, A and Z are as defined in claim 1 and B is hydrogen or $C_{1-4}$alkyl.

3. A reactive dye according to claim 1, in which D, R, A and Z are as defined in claim 1 and B is a radical of the formula

$$—A—SO_2—Z \qquad (2)$$

in which A and Z are as defined in claim 1.

4. A reactive dye according to claim 1, wherein D, R, Z and B are as defined in claim 1 and A is ethylene.

5. A reactive dye according to claim 2 of the formula

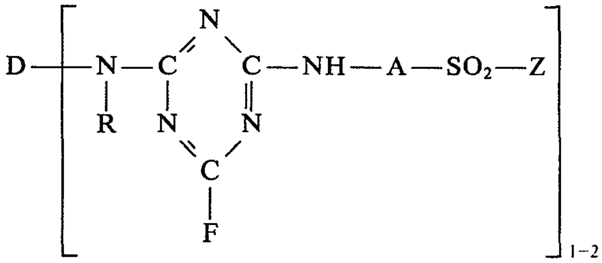 (3)

in which D and Z are as defined in claim 2, R is hydrogen, methyl or ethyl, and A is $C_{2-4}$alkylene.

6. A reactive dye according to claim 5, wherein A is ethylene.

7. A reactive dye according to claim 3 of the formula

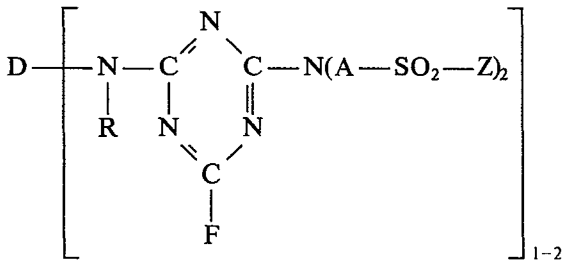 (4)

in which D and Z are as defined in claim 3, R is hydrogen, methyl or ethyl, and A is $C_{2-4}$alkylene.

8. A reactive dye according to claim 7, wherein A is ethylene.

9. A reactive dye according to any one of claims 1 to 8, wherein D is the radical of a formazan dye.

10. A reactive dye according to any one of claims 1 to 8, wherein D is the radical of an anthraquinone or phthalocyanine dye.

11. A reactive dye according to any one of claims 1 to 8, wherein D is the radical of a dioxazine dye.

12. A process for the preparation of a reactive dye according to claim 1, which comprises an organic dye of the formula

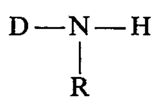 (5)

or a dye precursor with at least one equivalent of 2,4,6-trifluoro-1,3,5-triazine of the formula

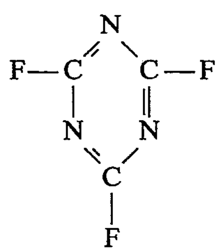 (6)

and condensing the condensation product with at least one equivalent of an amine of the formula

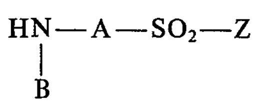 (7)

to give a reactive dye of the formula (1), and where D, R, A, Z and B in the formulae (5) and (7) are as defined in claim 1, and wherein if a dye precursor is used, it is converted into a desired final dye.

13. Use of a reactive dye according to any one of claims 1 to 11 or of a reactive dye obtained according to claim 12 for dyeing or printing.

14. Use according to claim 13 for dyeing cellulose fibers.

**Revendications**

1. Colorants réactifs de formule

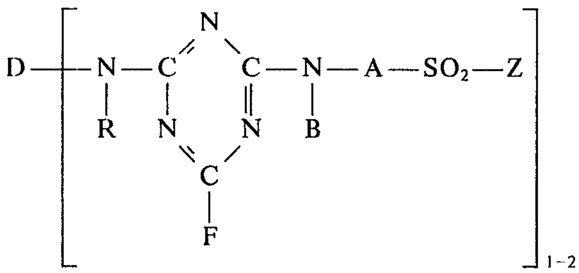

(1)

dans laquelle D est le reste d'un colorant organique de la famille des anthraquinone, phtalocyanine, formazane, azométhine, dioxazine, phénazine, triphénylméthane, xanthène, thioxanthone, nitroaryle, naphtoquinone, pyrènequinone ou pérylènetétracarbimide; R est un hydrogène ou un reste alkyle en $C_{1-4}$ éventuellement substitué; A est un reste alkylène en $C_{2-6}$; Z est un reste éthyle $\beta$-halogéné ou un reste vinyle, et B est de l'hydrogène ou le reste d'un hydrocarbure éventuellement substitué.

2. Colorants réactifs selon la revendication 1, dans lesquels D, R, A et Z ont les significations indiquées pour la formule (1) et B est de l'hydrogène ou un reste alkyle en $C_{1-4}$.

3. Colorants réactifs selon la revendication 1, dans lesquels D, R, A et Z ont les significations indiquées dans la revendication 1, et B est un reste de formule:

$$—A—SO_2—Z \qquad (2)$$

dans laquelle A et Z ont les significations indiquées dans la revendication 1.

4. Colorants réactifs selon la revendication 1, dans lesquels D, R, Z et B ont les significations indiquées dans la revendication 1, et A est le radical éthylène.

5. Colorants réactifs selon la revendication 2 de formule:

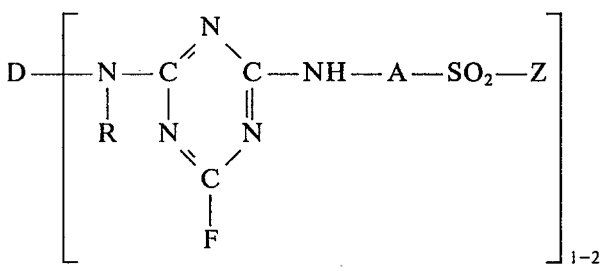

(3)

dans laquelle D et Z ont les significations indiquées dans la revendication 2; R est de l'hydrogène, un reste méthyle ou éthyle, et A un reste alkylène en $C_{2-4}$.

6. Colorants réactifs selon la revendication 5, dans lesquels A est le radical éthylène.

7. Colorants réactifs selon la revendication 3 de formule:

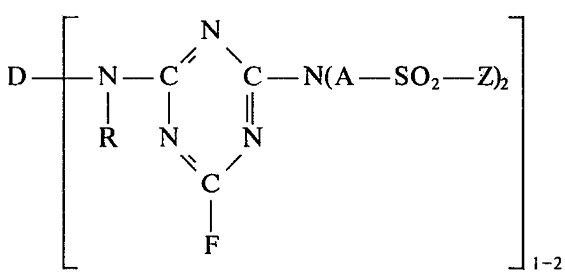

(4)

dans laquelle D et Z ont les significations indiquées dans la revendication 3; R est de l'hydrogène, un reste méthyle ou éthyle, et A est un reste alkylène en $C_{2-4}$.

8. Colorants réactifs selon la revendication 6, dans lesquels A est le radical éthylène.

9. Colorants réactifs selon l'une des revendications 1 à 8, dans lesquels D est le reste d'un colorant formazane.

10. Colorants réactifs selon l'une des revendication 1 à 8, dans lesquels D est le reste d'un colorant d'anthraquinone ou de phtalocyanine.

11. Colorants réactifs selon l'une des revendications 1 à 8, dans lesquels D est le reste d'un colorant de dioxazine.

12. Procédé de préparation de colorants réactifs selon la revendication 1, caractérisé en ce qu'on condense des colorants organiques de formule:

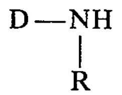
(5)

ou des précurseurs de colorants avec au moins un équivalent de 2,4,6-trifluoro-1,3,5-triazine de formule:

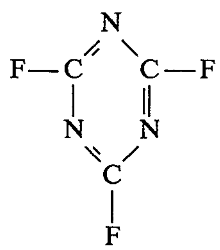
(6)

et qu'on condense le produit de condensation avec au moins un équivalent d'une amine de formule:

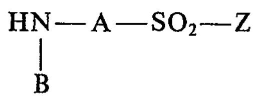
(7)

en un colorant réactif de formule (1), les symboles D, R, A, Z et B dans les formules (5) et (7) ayant les significations indiquées dans la revendication 1, et que dans le cas de l'utilisation de précurseurs de colorants, on transforme ceux-ci en les colorants finis souhaités.

13. Utilisation des colorants réactifs selon les revendications 1 à 11 ou des colorants réactifs obtenus selon la revendication 12 pour la teinture et l'impression.

14. Utilisation selon la revendication 13 pour teindre des fibres de cellulose.